# EUROPEAN PATENT APPLICATION

(11) **EP 4 706 869 A1**
(43) Date of publication of application: **11.03.2026**
(21) Application number: 23963038.7
(22) Date of filing: 26.12.2023
(51) Int. Cl.: B23K 26/16

(54) **DROSS CONVEYOR, LASER MACHINING DEVICE, AND WORKPIECE MACHINING METHOD**

(71) Applicant: Yamazaki Mazak Corporation, Niwa-gun, Aichi 480-0197 (JP)
(72) Inventor: MICHINAKA, Kengo, Niwa-gun, Aichi 480-0197 (JP); KOBAYASHI, Yoji, Niwa-gun, Aichi 480-0197 (JP); SASAKI, Satoshi, Niwa-gun, Aichi 480-0197 (JP); TAHARA, Makoto, Niwa-gun, Aichi 480-0197 (JP)
(74) Representative: TBK
(86) International application number: PCT/JP2023/046602
(87) International publication number: WO 2025/141682

(57) **Abstract**

A dross transportation conveyor includes: a group of transportation plates including a first transportation plate and a second transportation plate, the first transportation plate extending in a first direction, the second transportation plate being disposed to be adjacent to the first transportation plate and extending in the first direction, the group of transportation plates transporting dross generated by irradiation of a laser beam on a workpiece. The first transportation plate includes: a first front end portion; a first rear end portion; and a first middle portion including a first concave portion that extends in the first direction, the first middle portion connecting the first front end portion with the first rear end portion.

## Description

### Technical Field

The present invention relates to a dross transportation conveyor, a laser beam machine apparatus, and a workpiece machining method.

### Background Art

A laser beam machine including a chip conveyor is known.

As a related art, Patent Literature 1 discloses a chip conveyor of a laser beam machine. The chip conveyor described in Patent Literature 1 includes a large number of plates that constitute a conveyor belt. Each plate is bendably coupled to another plate by a joint.

### Citation List

### Patent Literature

PTL1: Microfilm of JP Utility Model Application No. H03-19091 (published as JP H04-108984 U).

### Summary of Invention

### Technical Problem

An object of the present invention is to provide a dross transportation conveyor, a laser beam machine apparatus, and a workpiece machining method, which are capable of eliminating or minimizing thermal deformation of a transportation plate.

### Solution to Problem

A dross transportation conveyor, according to some embodiments, includes: a group of transportation plates including a first transportation plate and a second transportation plate, the first transportation plate extending in a first direction, the second transportation plate being disposed to be adjacent to the first transportation plate and extending in the first direction, the group of transportation plates transporting dross generated by irradiation of a laser beam on a workpiece. The first transportation plate includes: a first front end portion; a first rear end portion; and a first middle portion comprising a first concave portion that extends in the first direction, the first middle portion connecting the first front end portion with the first rear end portion.

A laser beam machine apparatus, according to some embodiments, includes: a laser beam irradiator comprising a laser head that irradiates a workpiece with a laser beam; a mover that moves the leaser head relative to a workpiece support member that supports the workpiece; a controller configured to control the laser beam irradiator and the mover; and a dross transportation conveyor. The dross transportation conveyor includes: a group of transportation plates including a first transportation plate and a second transportation plate, the first transportation plate extending in a first direction, the second transportation plate being disposed to be adjacent to the first transportation plate and extending in the first direction, the group of transportation plates transporting dross generated by irradiation of the laser beam on the workpiece. The first transportation plate includes: a first front end portion; a first rear end portion; and a first middle portion comprising a first concave portion that extends in the first direction, the first middle portion connecting the first front end portion with the first rear end portion.

A workpiece machining method, according to some embodiments, includes the steps of: machining a workpiece by irradiating the workpiece with a laser beam; and transporting dross generated by irradiating the workpiece with the laser beam, by using a group of transportation plates including a first transportation plate and a second transportation plate, the first transportation plate extending in a first direction, the second transportation plate being disposed to be adjacent to the first transportation plate and extending in the first direction. The first transportation plate includes: a first front end portion; a first rear end portion; and a first middle portion comprising a first concave portion that extends in the first direction, the first middle portion connecting the first front end portion with the first rear end portion. The step of machining the workpiece is performed in a state in which a direction in which the first middle portion is thermally deflected by irradiation of the laser beam on the first concave portion and a direction in which the first front end portion is thermally deflected by the irradiation of the laser beam on the first front end portion are opposite to each other, and thermal deflection of the first transportation plate is eliminated or minimized.

### Effects of Invention

According to the present invention, it becomes possible to provide a dross transportation conveyor, a laser beam machine apparatus, and a workpiece machining method, which are capable of eliminating or minimizing thermal deformation of a transportation plate.

### Brief Description of Drawings

[FIG. 1] FIG. 1 is a schematic cross-sectional view of a laser beam machine apparatus according to a first embodiment.
[FIG. 2] FIG. 2 is a schematic cross-sectional view of a part of the laser beam machine apparatus according to the first embodiment.
[FIG. 3] FIG. 3 is a schematic cross-sectional view of an example of a first transportation plate.
[FIG. 4] FIG. 4 is a schematic perspective view of an example of the first transportation plate.
[FIG. 5] FIG. 5 is a schematic perspective view of a transportation plate in a comparative example.
[FIG. 6] FIG. 6 is a schematic perspective view of a state in which a first concave portion is thermally deflected in a fourth direction resulting from irradiation of a laser beam on the first concave portion.
[FIG. 7] FIG. 7 is a schematic perspective view of a state in which a first front end portion is thermally deflected in a third direction resulting from the irradiation of the laser beam on the first front end portion.
[FIG. 8] FIG. 8 is a schematic perspective view of the laser beam machine apparatus according to the first embodiment.
[FIG. 9] FIG. 9 is a schematic perspective view of a state in which a group of transportation plates including a first transportation plate and a second transportation plate is movable along a circling orbit.
[FIG. 10] FIG. 10 is a schematic perspective view of a dross transportation conveyor according to the first embodiment.
[FIG. 11] FIG. 11 is an exploded perspective view of a part of the group of transportation plates, schematically illustrating the part of the group of transportation plates.
[FIG. 12] FIG. 12 is a schematic illustration of a state in which the first transportation plate is attached to a first endless chain and a second endless chain.
[FIG. 13] FIG. 13 is an enlarged schematic cross-sectional view of a turn-around portion of the dross transportation conveyor according to the first embodiment.
[FIG. 14] FIG. 14 is a schematic cross-sectional view of a part of the laser beam machine apparatus according to the first embodiment.
[FIG. 15] FIG. 15 is a schematic perspective view of an example of a first transportation plate and the second transportation plate.
[FIG. 16] FIG. 16 is a schematic cross-sectional view of a part of the laser beam machine apparatus according to the first embodiment.
[FIG. 17] FIG. 17 is a schematic cross-sectional view of a part of the laser beam machine apparatus according to the first embodiment.
[FIG. 18] FIG. 18 is a schematic perspective view of an example of the first transportation plate and the second transportation plate.
[FIG. 19] FIG. 19 is a schematic cross-sectional view of a part of the laser beam machine apparatus according to the first embodiment.
[FIG. 20] FIG. 20 is a schematic perspective view of an example of the first transportation plate and the second transportation plate.
[FIG. 21] FIG. 21 is a schematic cross-sectional view of a part of the laser beam machine apparatus according to the first embodiment.
[FIG. 22] FIG. 22 is a schematic cross-sectional view of a part of the laser beam machine apparatus according to the first embodiment.
[FIG. 23] FIG. 23 is a schematic perspective view of an example of the first transportation plate and the second transportation plate.
[FIG. 24] FIG. 24 is a schematic plan view of an example of the first transportation plate.
[FIG. 25] FIG. 25 is a schematic cross-sectional view of a part of the group of transportation plates.
[FIG. 26] FIG. 26 is a schematic cross-sectional view of a state in which a circling orbit of the group of transportation plates includes an upward inclination.
[FIG. 27] FIG. 27 is a schematic side view of the laser beam machine apparatus according to the first embodiment.
[FIG. 28] FIG. 28 is a schematic plan view of a part of the laser beam machine apparatus according to the first embodiment.
[FIG. 29] FIG. 29 is a schematic perspective view of a part of a workpiece support member.
[FIG. 30] FIG. 30 is a schematic perspective view of a laser beam machine apparatus according to a first modification of the first embodiment.
[FIG. 31] FIG. 31 is a schematic plan view of a state in which a machined workpiece is removed from the workpiece support member.
[FIG. 32] FIG. 32 is a schematic perspective view of a laser beam machine apparatus according to a second modification of the first embodiment.
[FIG. 33] FIG. 33 is a schematic illustration of a state in which a controller is capable of controlling a plurality of pieces of to-be-controlled equipment.
[FIG. 34] FIG. 34 is a schematic side view of the laser beam machine apparatus according to the first embodiment.
[FIG. 35] FIG. 35 is a schematic cross-sectional view of a part of the laser beam machine apparatus including a cooler.
[FIG. 36] FIG. 36 is a schematic cross-sectional view of a laser beam machine apparatus according to a second embodiment.
[FIG. 37] FIG. 37 is a schematic cross-sectional view of a part of the laser beam machine apparatus according to the second embodiment.
[FIG. 38] FIG. 38 is an exploded perspective view of a part of the group of transportation plates, schematically illustrating the part of the group of transportation plates.
[FIG. 39] FIG. 39 is a schematic perspective view of a state in which the group of transportation plates including the first transportation plate and the second transportation plate is movable along the circling orbit.
[FIG. 40] FIG. 40 is a schematic cross-sectional view of a part of the laser beam machine apparatus according to the second embodiment.
[FIG. 41] FIG. 41 is an exploded perspective view of a part of the group of transportation plates, schematically illustrating the part of the group of transportation plates.
[FIG. 42] FIG. 42 is a schematic cross-sectional view of a part of the group of transportation plates.
[FIG. 43] FIG. 43 is a flowchart illustrating an example of a workpiece machining method according to a third embodiment.

### Description of Embodiments

Hereinafter, a dross transportation conveyor 2, a laser beam machine apparatus 1, and a workpiece machining method according to embodiments will be described with reference to the drawings. It is to be noted that in the following description of the embodiments, portions and members having the same functions are denoted by the same reference numerals, and repeated descriptions of the portions and members denoted by the same reference numerals will be omitted.

### (Definition of Terms)

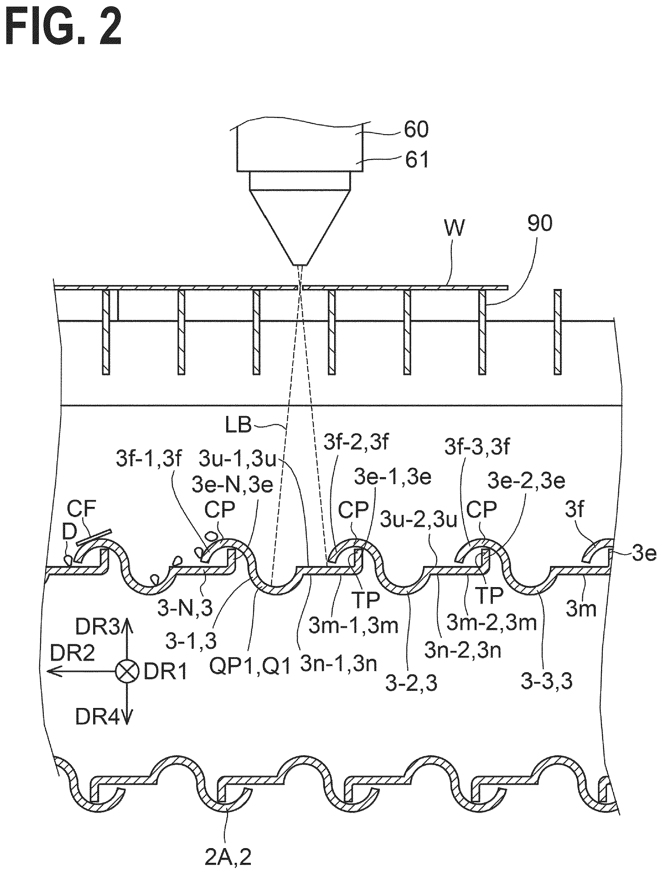

As illustrated in FIG. 2, each transportation plate 3 in a group of transportation plates 3 has a transportation surface 3u. Herein, the transportation surface means a surface that supports dross directly or indirectly via another member or any member in transporting the dross. More specifically, the transportation surface 3u is a surface that faces substantially upward in transporting the dross. For example, a first transportation surface 3u-1 of a first transportation plate 3-1 supports the dross directly or indirectly via another member, while the first transportation plate 3-1 is transporting the dross. The first transportation surface 3u-1 of the first transportation plate 3-1 faces substantially upward, while the first transportation plate 3-1 is transporting the dross. In addition, a second transportation surface 3u-2 of a second transportation plate 3-2 supports the dross directly or indirectly via another member, while the second transportation plate 3-2 is transporting the dross. The second transportation surface 3u-2 of the second transportation plate 3-2 faces substantially upward, while the second transportation plate 3-2 is transporting the dross.

As illustrated in FIG. 2, each transportation plate 3 in the group of transportation plates 3 has a back surface 3n. Herein, the back surface means a surface opposite to the transportation surface 3u in each transportation plate. More specifically, the back surface 3n is a surface that faces substantially downward, in transporting the dross. For example, a first back surface 3n-1 of the first transportation plate 3-1 is a surface located below the first transportation surface 3u-1, while the first transportation plate 3-1 is transporting the dross. The first back surface 3n-1 of the first transportation plate 3-1 faces substantially downward, while the first transportation plate 3-1 is transporting the dross. In addition, a second back surface 3n-2 of the second transportation plate 3-2 is a surface located below the second transportation surface 3u-2, while the second transportation plate 3-2 is transporting the dross. More specifically, the second back surface 3n-2 of the second transportation plate 3-2 faces substantially downward, while the second transportation plate 3-2 is transporting the dross.

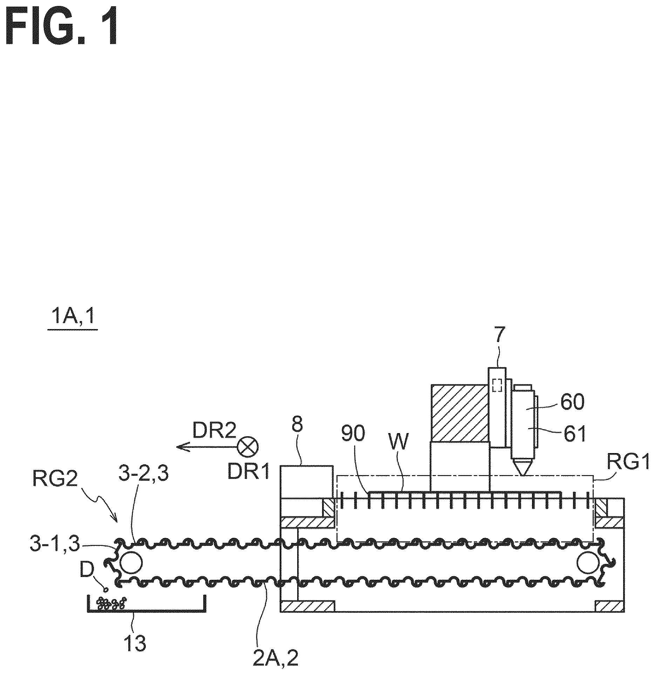

Herein, a "machine region RG1" is defined as a region that is reachable by a laser beam emitted from a laser beam irradiator 60 (see FIG. 1). A workpiece W, which is arranged in the machine region RG1, is machined (more specifically, cut or drilled) by a laser beam. The dross generated by irradiation of the laser beam on the workpiece W is received by the group of transportation plates 3 in the machine region RG1.

### (Definition of Directions)

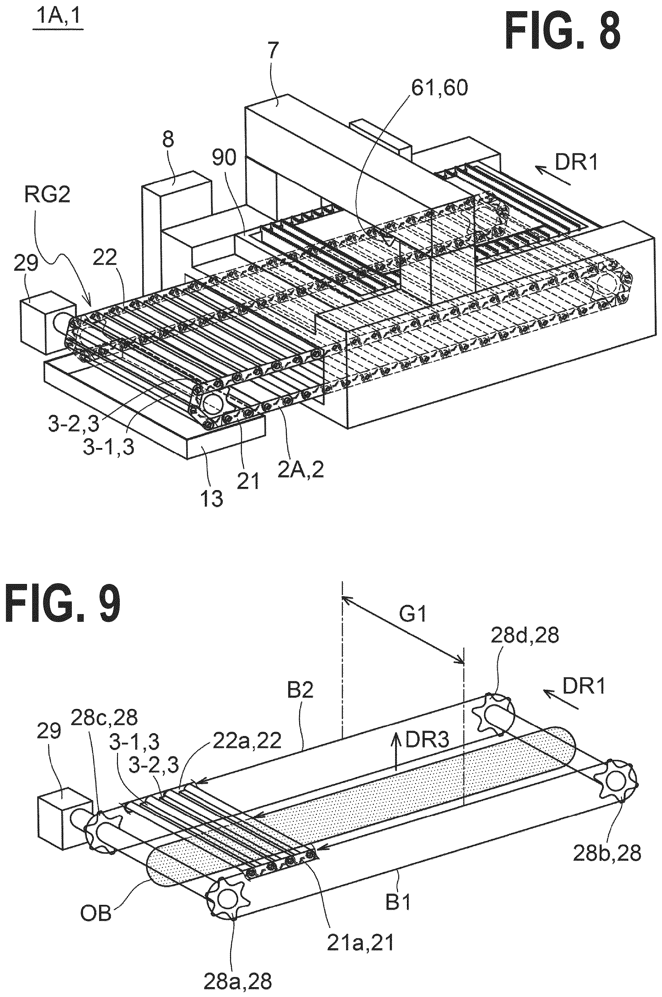

Herein, a first direction DR1 is defined as an extending direction of the first transportation plate 3-1 (or an extending direction of each transportation plate 3). Herein, a second direction DR2 is defined as a moving direction of the group of transportation plates 3 (or a moving direction of each transportation plate 3). As illustrated in FIG. 9, herein, a third direction DR3 is defined as a direction from the inside of a circling orbit OB of the group of transportation plates 3 (see a portion hatched with dots in FIG. 9) toward the outside of the circling orbit OB, and a fourth direction DR4 is defined as a direction opposite to the third direction DR3. As illustrated in FIG. 2, the third direction DR3 denotes a direction from the first back surface 3n-1 of the first transportation plate 3-1 toward the first transportation surface 3u-1 of the first transportation plate 3-1. The third direction DR3 also denotes a direction from the second back surface 3n-2 of the second transportation plate 3-2 toward the second transportation surface 3u-2 of the second transportation plate 3-2. As illustrated in FIG. 2, the fourth direction DR4 denotes a direction from the first transportation surface 3u-1 of the first transportation plate 3-1 toward the first back surface 3n-1 of the first transportation plate 3-1. The fourth direction DR4 also denotes a direction from the second transportation surface 3u-2 of the second transportation plate 3-2 toward the second back surface 3n-2 of the second transportation plate 3-2.

### (First Embodiment)

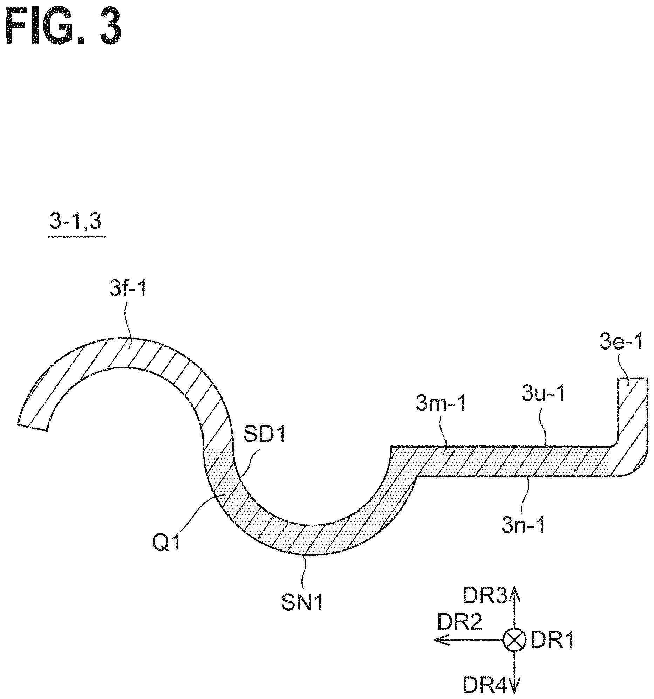

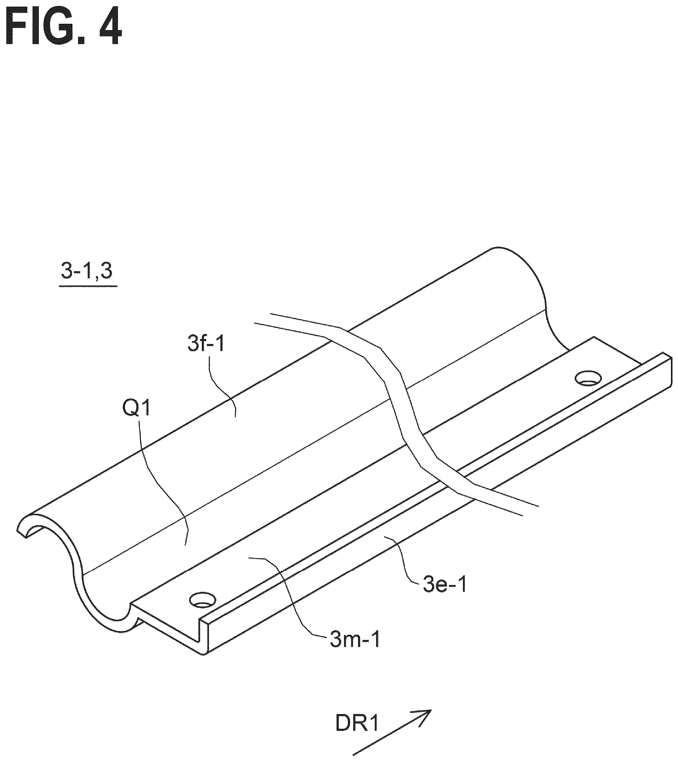

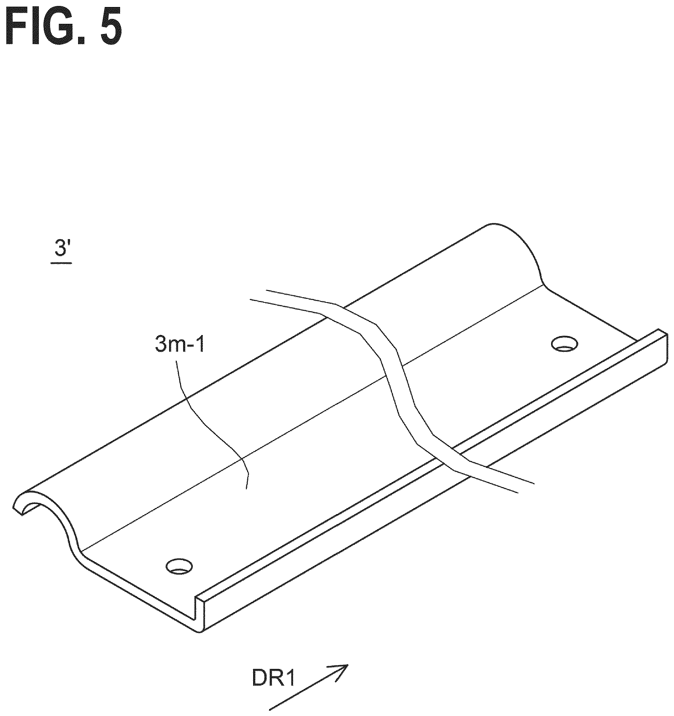

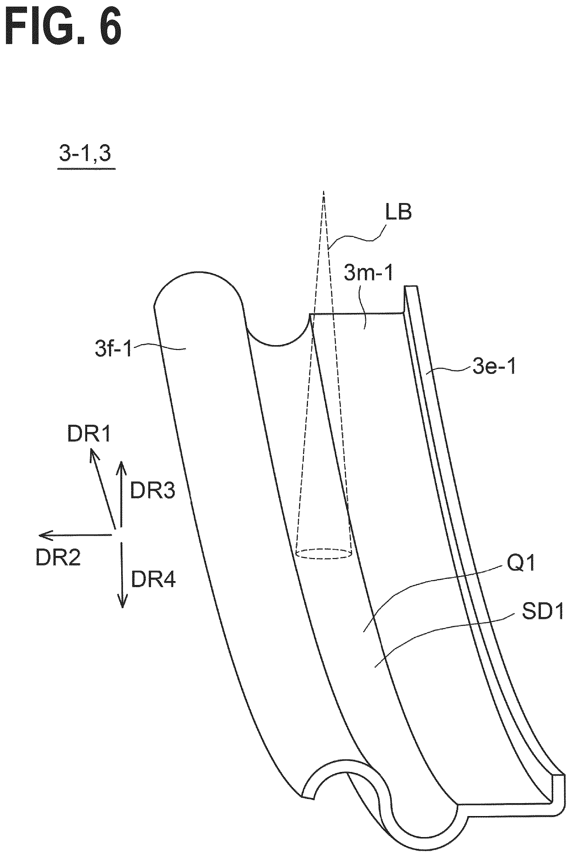

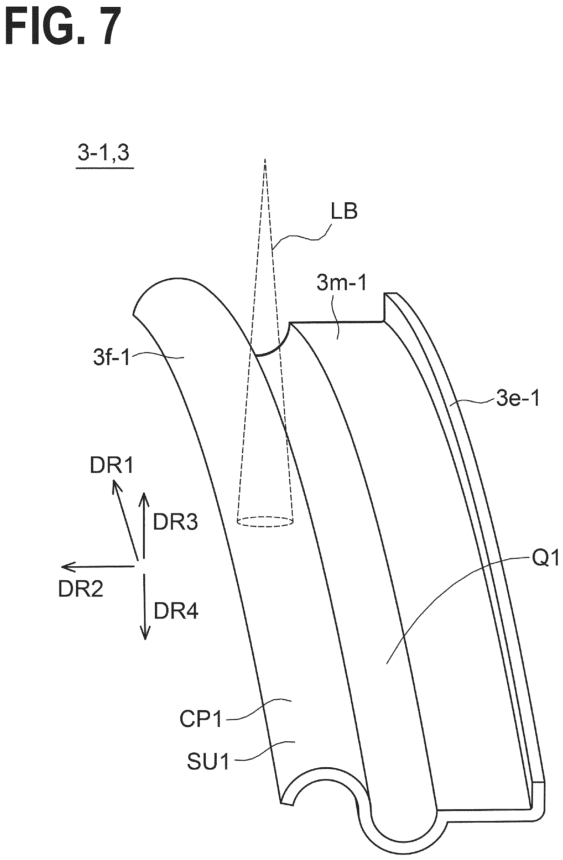

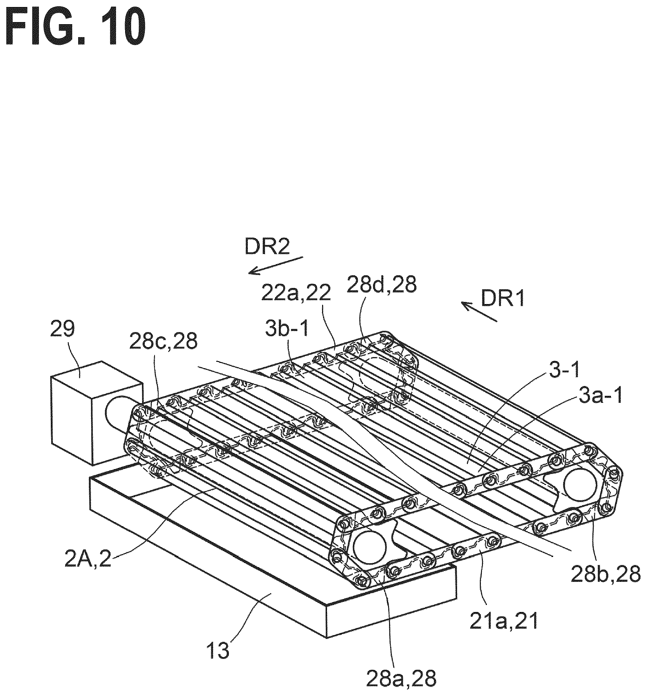

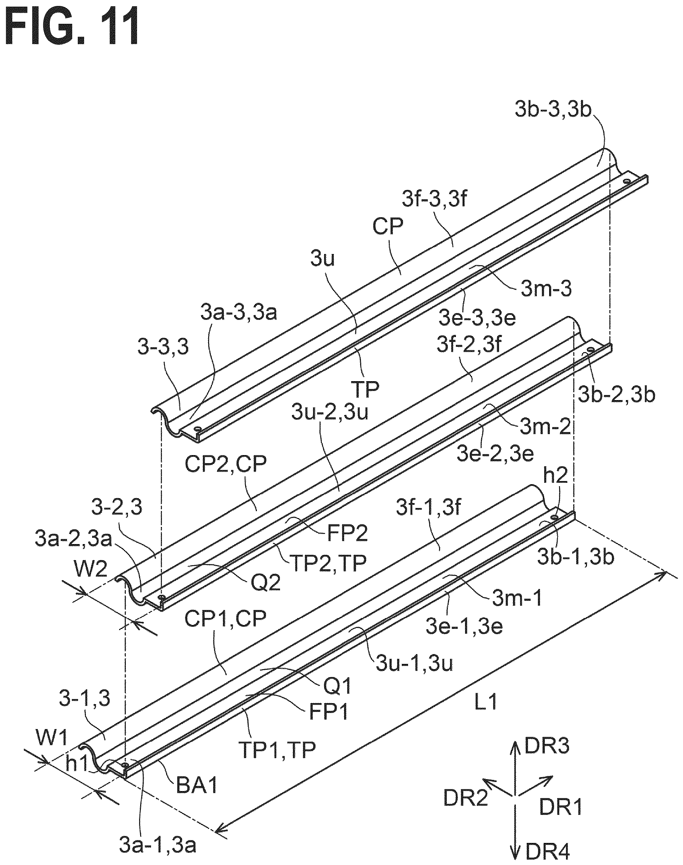

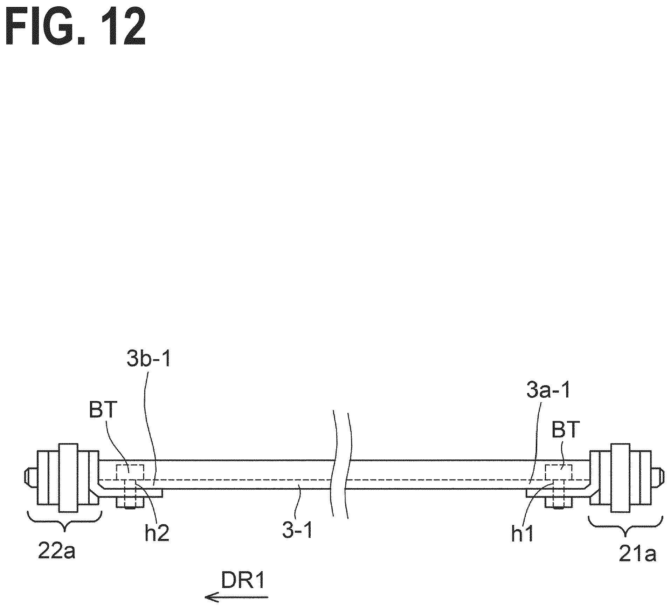

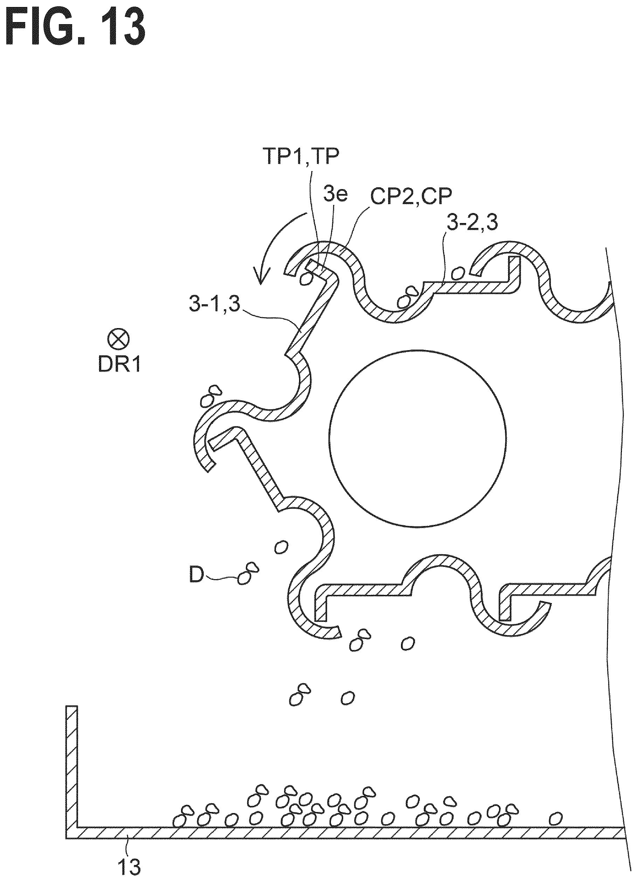

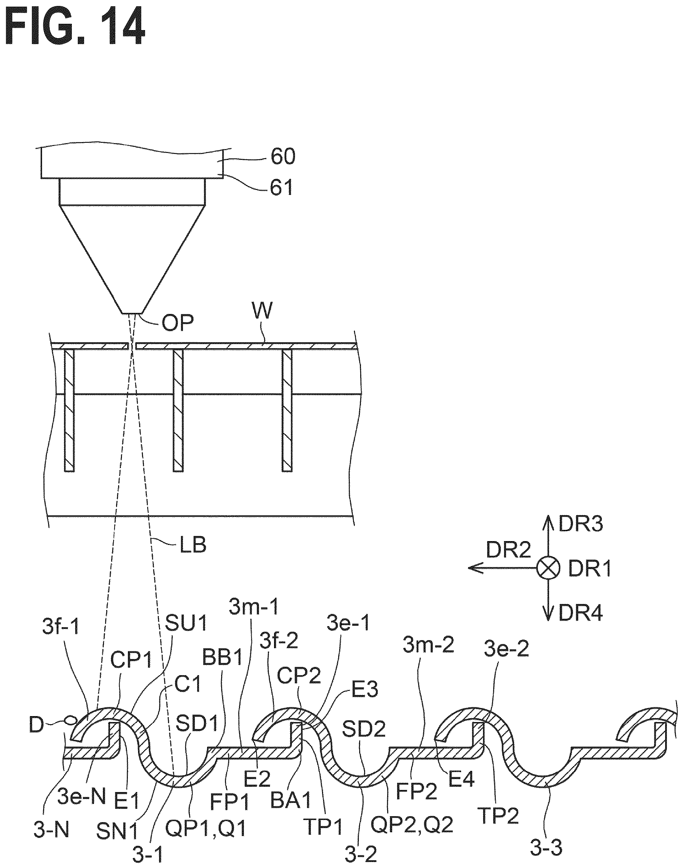

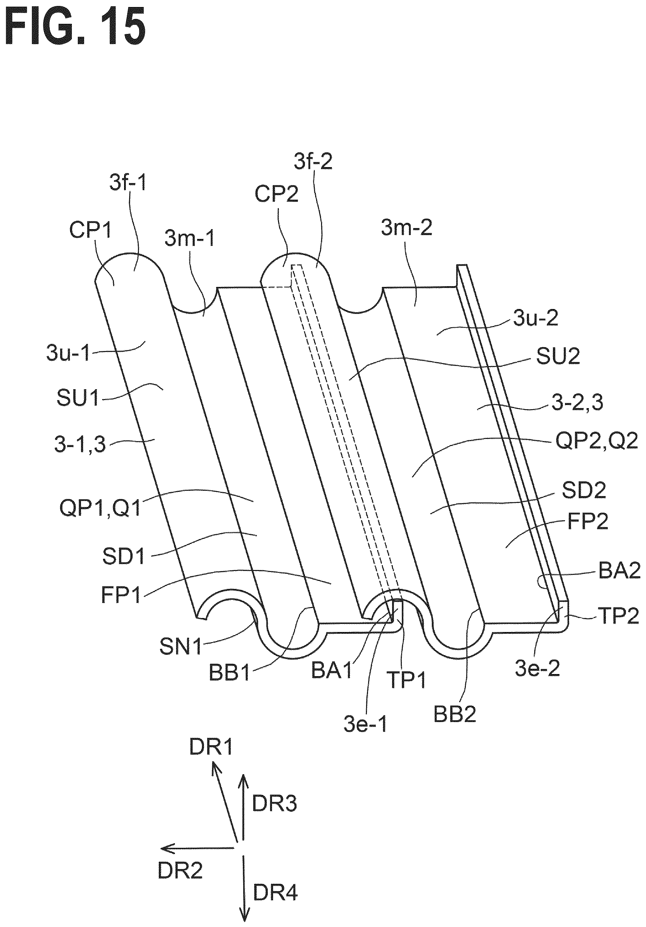

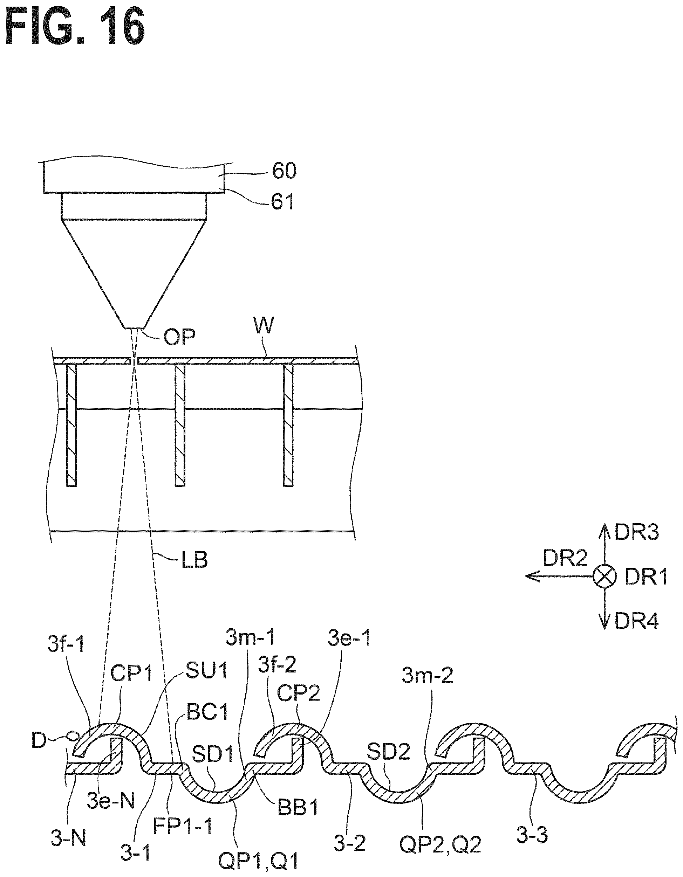

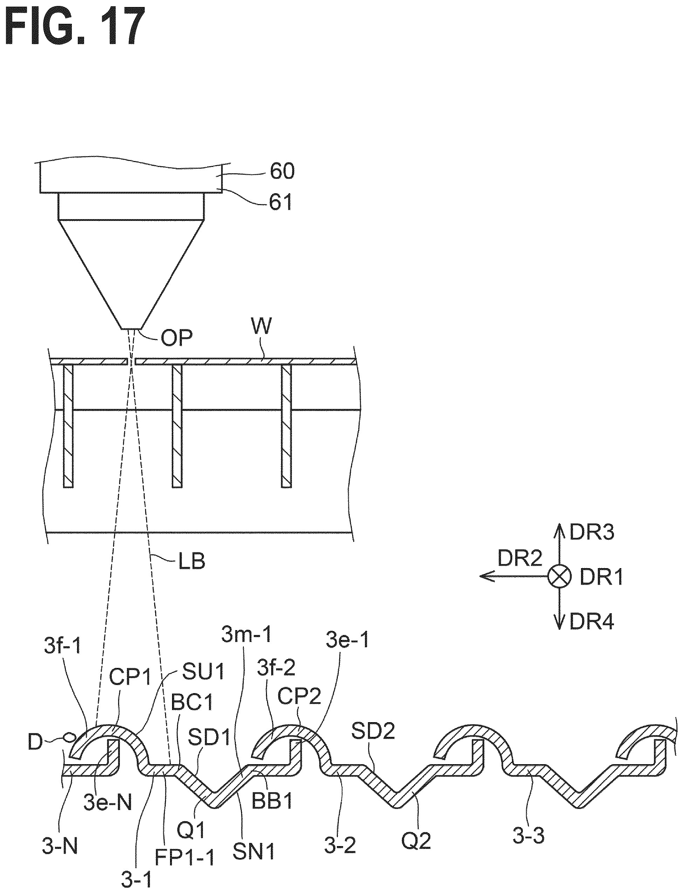

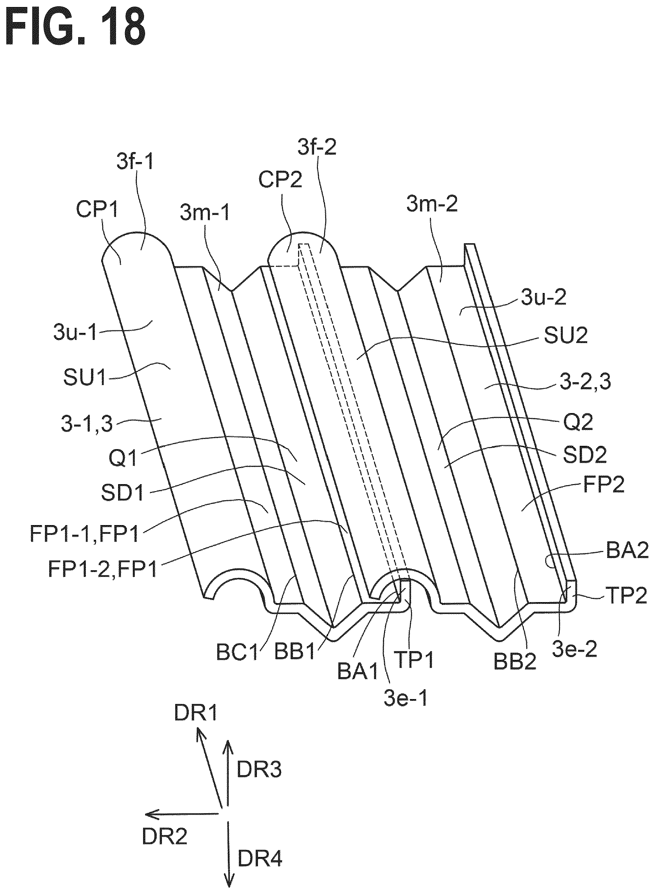

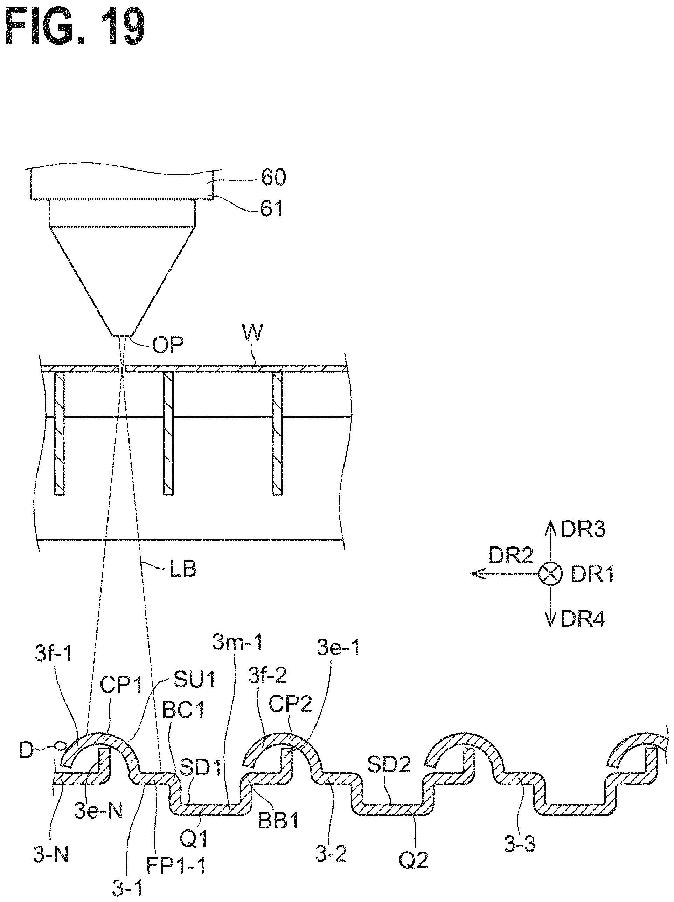

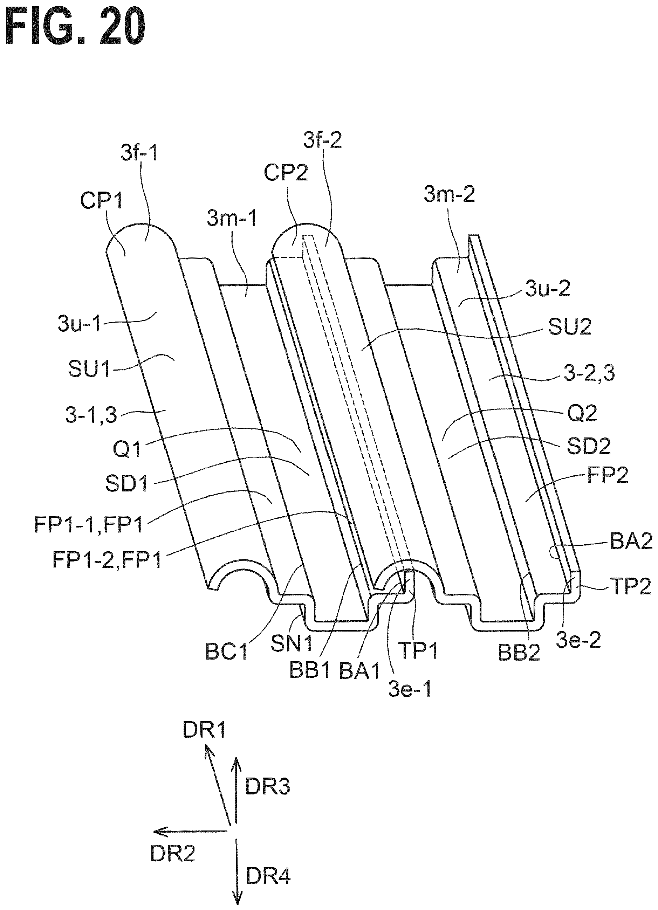

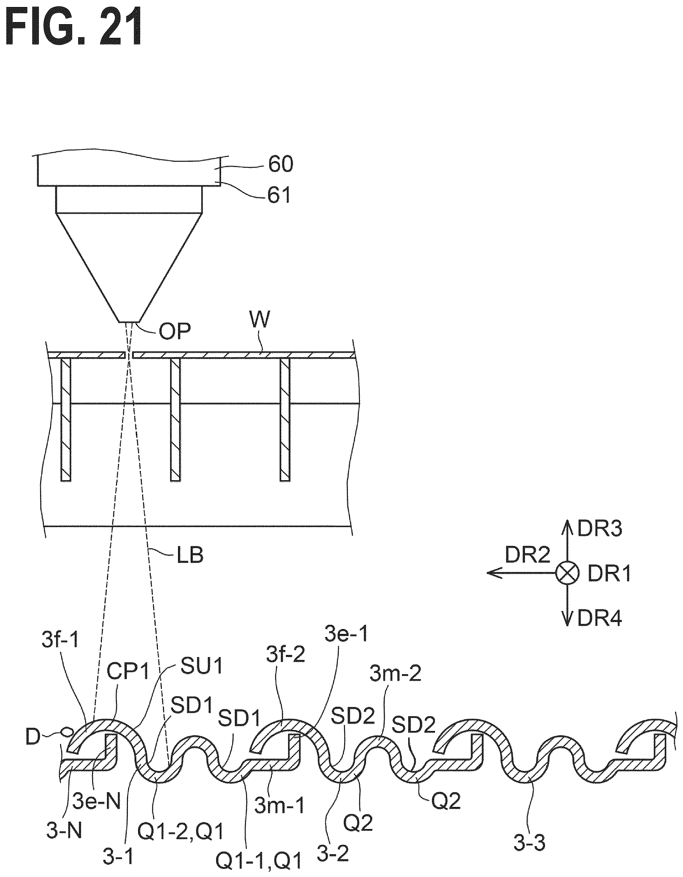

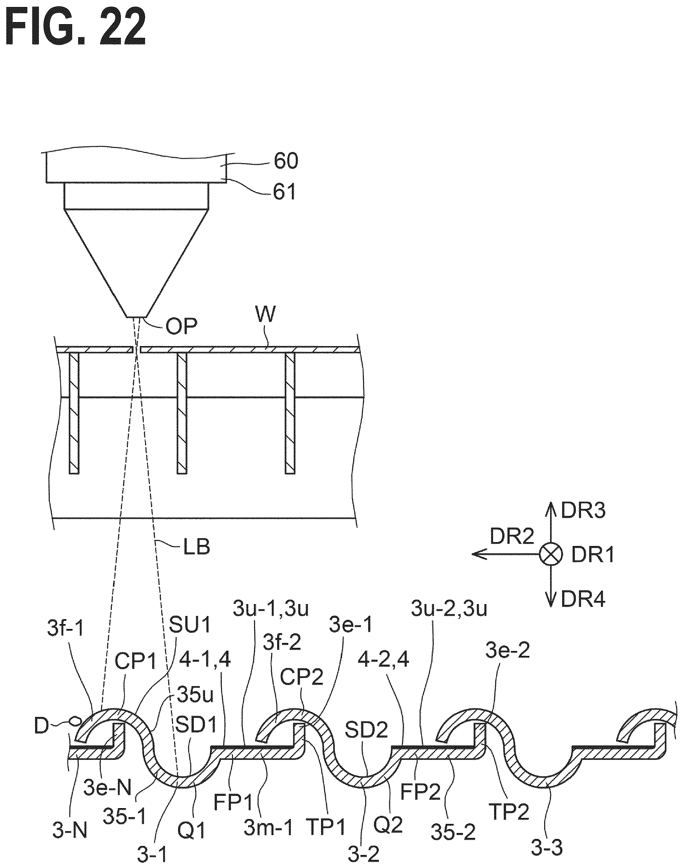

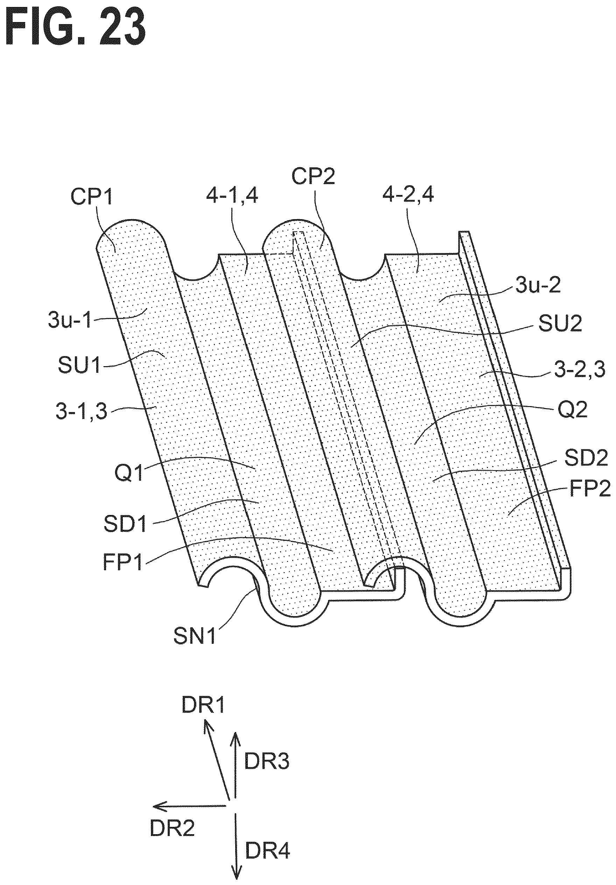

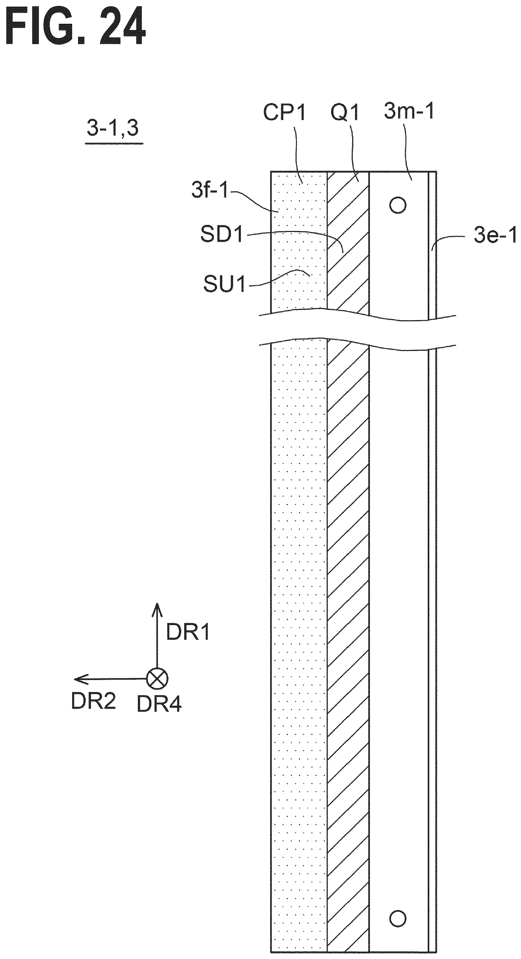

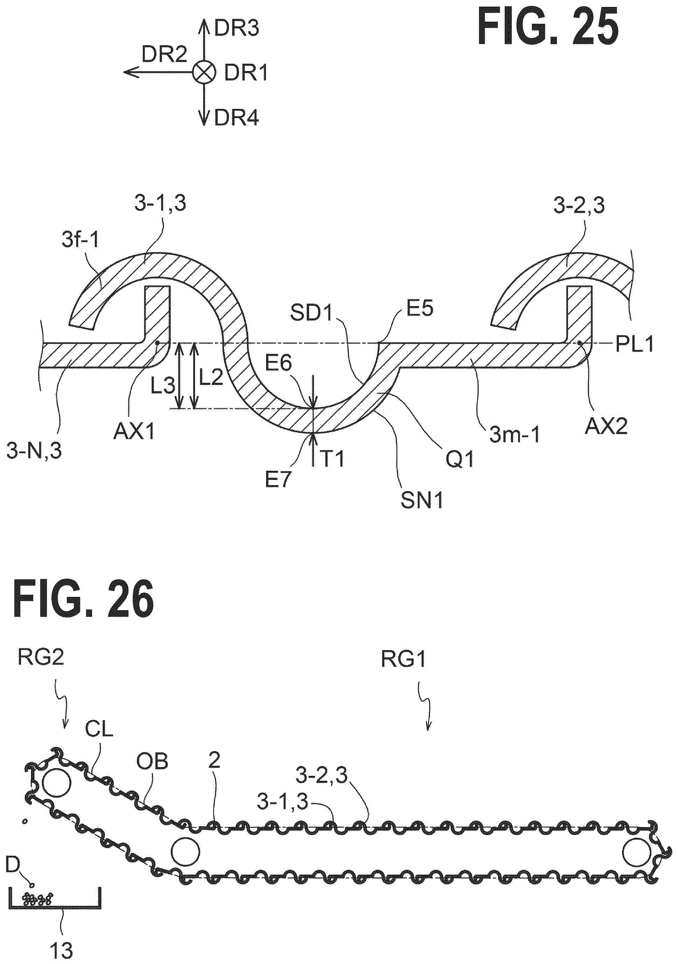

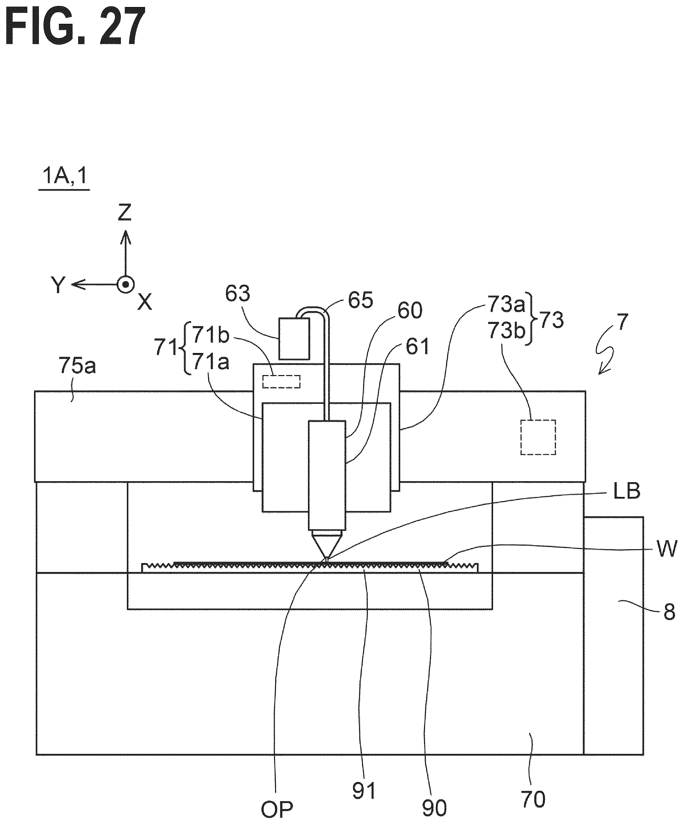

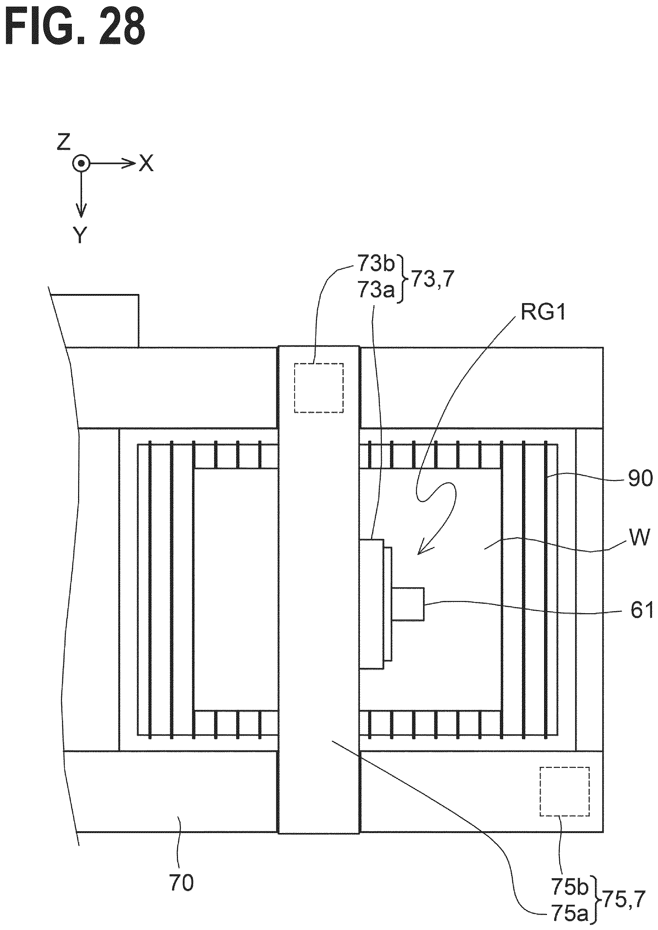

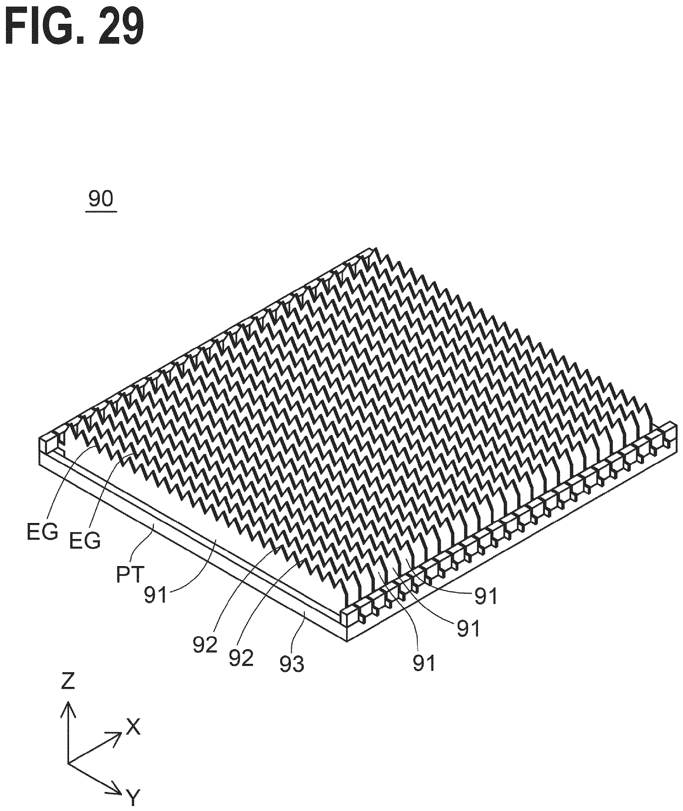

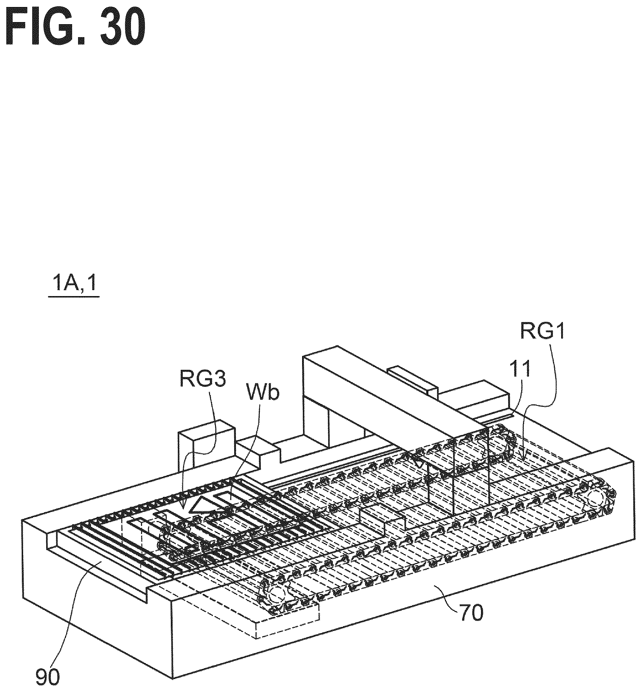

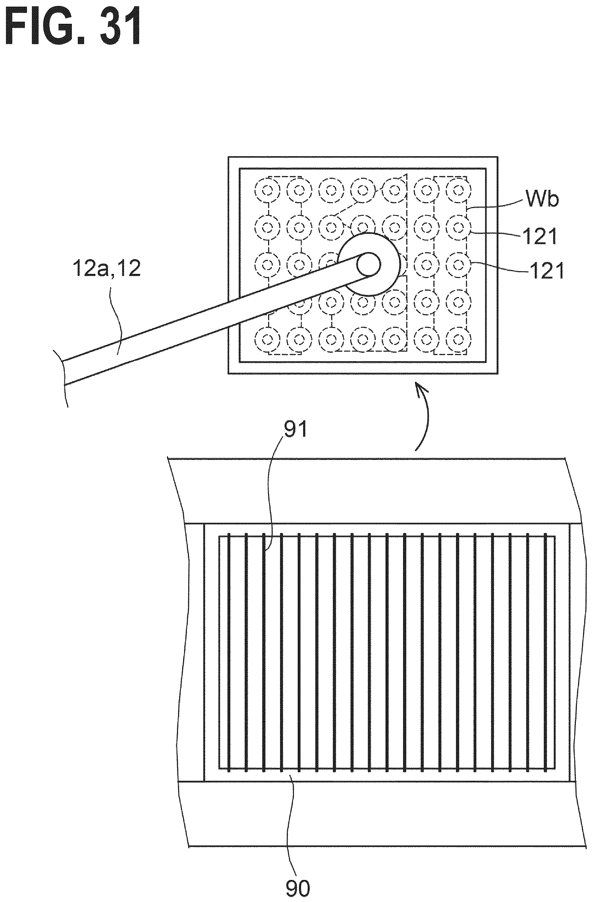

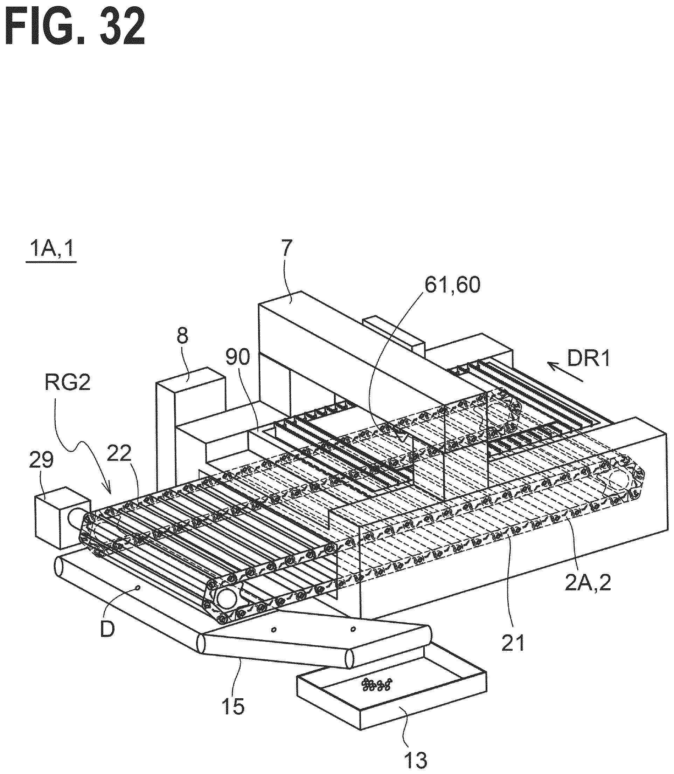

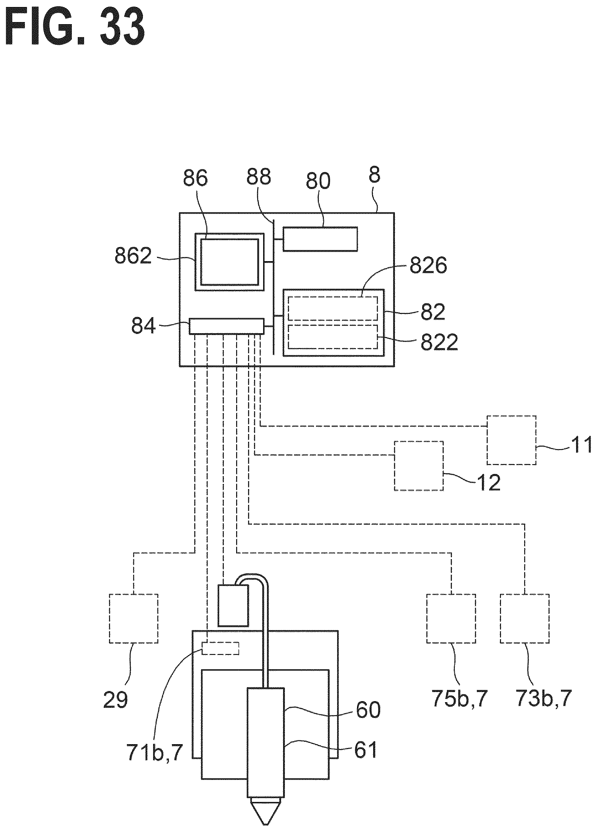

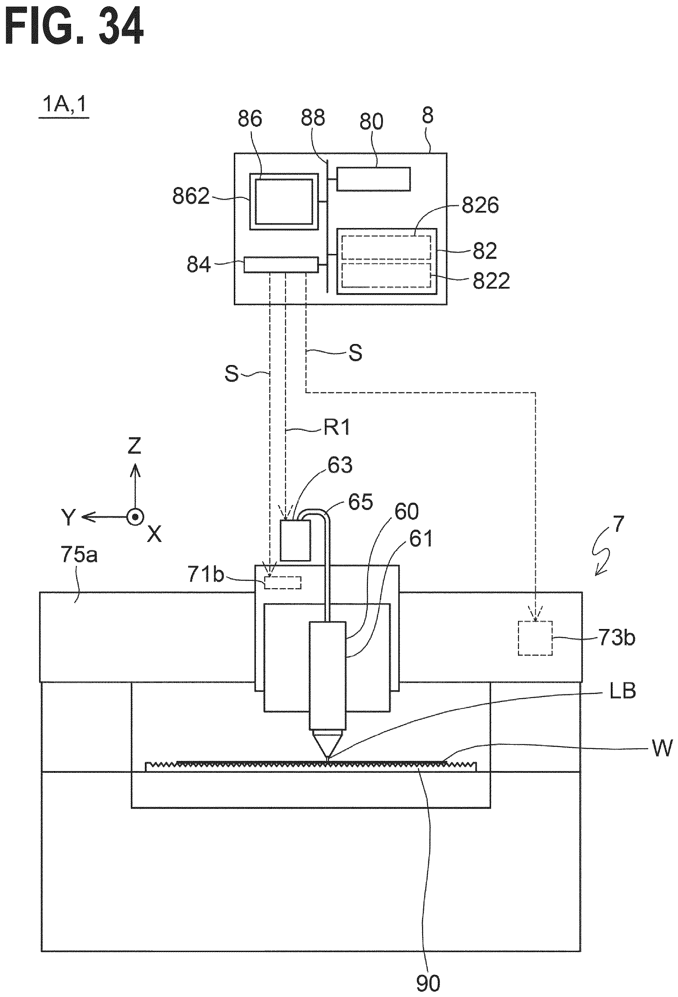

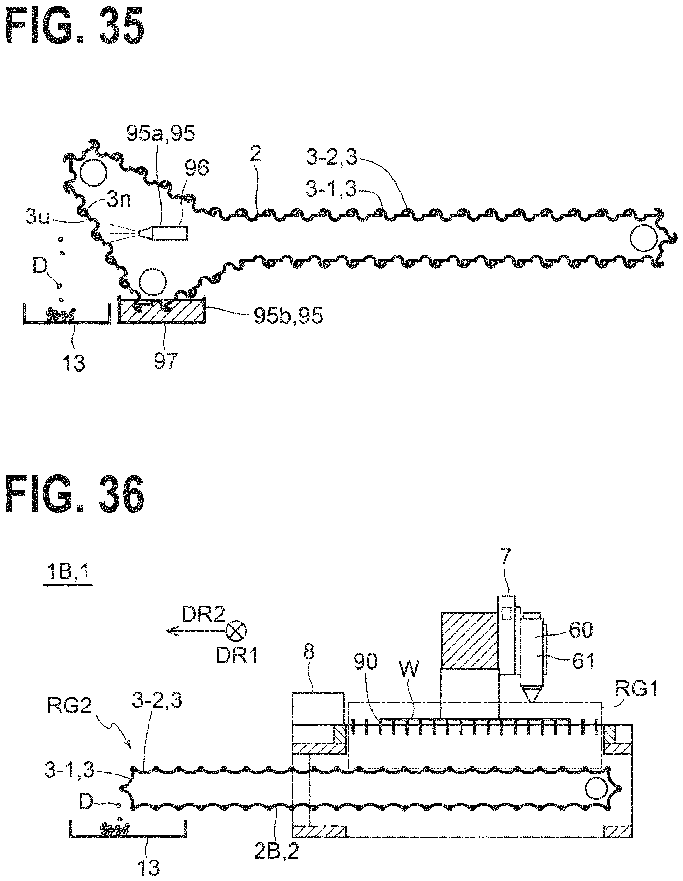

Referring to FIGs. 1 to 35, a dross transportation conveyor 2A and the laser beam machine apparatus 1A according to the first embodiment will be described. FIG. 1 is a schematic cross-sectional view of the laser beam machine apparatus 1A according to the first embodiment. FIG. 2 is a schematic cross-sectional view of a part of the laser beam machine apparatus 1A according to the first embodiment. FIG. 3 is a schematic cross-sectional view of an example of the first transportation plate 3-1. FIG. 4 is a schematic perspective view of an example of the first transportation plate 3-1. FIG. 5 is a schematic perspective view of a transportation plate 3' in a comparative example. FIG. 6 is a schematic perspective view of a state in which a first concave portion Q1 is thermally deflected in the fourth direction DR4 resulting from irradiation of a laser beam LB on the first concave portion Q1. FIG. 7 is a schematic perspective view of a state in which a first front end portion 3f-1 is thermally deflected in the third direction DR3 resulting from the irradiation of the laser beam LB on the first front end portion 3f-1. FIG. 8 is a schematic perspective view of the laser beam machine apparatus 1A according to the first embodiment. FIG. 9 is a schematic perspective view of a state in which the group of transportation plates 3, including the first transportation plate 3-1 and the second transportation plate 3-2, is movable along the circling orbit OB. FIG. 10 is a schematic perspective view of the dross transportation conveyor 2A according to the first embodiment. FIG. 11 is an exploded perspective view of a part of the group of transportation plates 3, schematically illustrating the part of the group of transportation plates 3. FIG. 12 is a schematic illustration of a state in which the first transportation plate 3-1 is attached to a first endless chain 21a and a second endless chain 22a. FIG. 13 is an enlarged schematic cross-sectional view of a turn-around portion of the dross transportation conveyor 2A according to the first embodiment. FIG. 14 is a schematic cross-sectional view of a part of the laser beam machine apparatus 1A according to the first embodiment. FIG. 15 is a schematic perspective view of an example of the first transportation plate 3-1 and the second transportation plate 3-2. FIGs. 16 and 17 are each a schematic cross-sectional view of a part of the laser beam machine apparatus 1A according to the first embodiment. FIG. 18 is a schematic perspective view of an example of the first transportation plate 3-1 and the second transportation plate 3-2. FIG. 19 is a schematic cross-sectional view of a part of the laser beam machine apparatus 1A according to the first embodiment. FIG. 20 is a schematic perspective view of an example of the first transportation plate 3-1 and the second transportation plate 3-2. FIGs. 21 and 22 are each a schematic cross-sectional view of a part of the laser beam machine apparatus 1A according to the first embodiment. FIG. 23 is a schematic perspective view of an example of the first transportation plate 3-1 and the second transportation plate 3-2. FIG. 24 is a schematic plan view of an example of the first transportation plate 3-1. FIG. 25 is a schematic cross-sectional view of a part of the group of transportation plates 3. FIG. 26 is a schematic cross-sectional view of a state in which the circling orbit OB of the group of transportation plates 3 includes an upward inclination CL. FIG. 27 is a schematic side view of the laser beam machine apparatus 1A according to the first embodiment. FIG. 28 is a schematic plan view of a part of the laser beam machine apparatus 1A according to the first embodiment. FIG. 29 is a schematic perspective view of an example of a workpiece support member 90. FIG. 30 is a schematic perspective view of a laser beam machine apparatus 1A according to a first modification of the first embodiment. FIG. 31 is a schematic plan view of a state in which a machined workpiece Wb is removed from the workpiece support member 90. FIG. 32 is a schematic perspective view of a laser beam machine apparatus 1A according to a second modification of the first embodiment. FIG. 33 is a schematic illustration of a state in which a controller 8 is capable of controlling a plurality of pieces of to-be-controlled equipment. FIG. 34 is a schematic side view of the laser beam machine apparatus 1A according to the first embodiment. FIG. 35 is a schematic cross-sectional view of a part of the laser beam machine apparatus including a cooler 95.

As illustrated in FIG. 2, the dross transportation conveyor 2A according to the first embodiment includes the group of transportation plates 3.

The group of transportation plates 3 transports dross D, which is generated by irradiation of a laser beam LB on the workpiece W. In addition to the dross D, the group of transportation plates 3 may transport cut-off pieces CF, which are generated by the irradiation of the laser beam LB on the workpiece W.

It is to be noted that herein, the dross means a mass having an irregular shape (in other words, a mass having a random shape) formed by solidification of a material (more specifically, a metal material) that has been melted by the irradiation of the laser beam.

The group of transportation plates 3 includes: the first transportation plate 3-1, which extends in the first direction DR1; and the second transportation plate 3-2, which extends in the first direction DR1. Each transportation plate 3 in the group of transportation plates 3 is an elongated plate with the first direction DR1 as its longitudinal direction. In an example illustrated in FIG. 2, the second transportation plate 3-2 is disposed to be adjacent to the first transportation plate 3-1.

The first transportation plate 3-1 includes: a front end portion (hereinafter, referred to as a "first front end portion 3f-1"); a rear end portion (hereinafter, referred to as a "first rear end portion 3e-1"); and a middle portion (hereinafter, referred to as a "first middle portion 3m-1"). It is to be noted that in an example illustrated in FIG. 2, the first front end portion 3f-1 is a front end portion in the moving direction (in other words, an end portion in the second direction DR2), and the first rear end portion 3e-1 is a rear end portion in the moving direction (in other words, an end portion opposite to the second direction DR2).

The first middle portion 3m-1 connects the first front end portion 3f-1 with the first rear end portion 3e-1. It is to be noted that in FIG. 3, in order to facilitate the understanding of the first middle portion 3m-1, the first middle portion 3m-1 is hatched with dots.

As illustrated in FIG. 3, the first middle portion 3m-1 includes a first concave portion Q1. As illustrated in FIG. 4, the first concave portion Q1 extends in the first direction DR1.

In the example illustrated in FIG. 2, the laser beam LB, which passes through the workpiece W, reaches the dross transportation conveyor 2A. The energy of the laser beam LB is partially converted into thermal energy, and the thermal energy increases the temperature of the first transportation plate 3-1. Such an increase in temperature thermally deforms the first transportation plate 3-1, and the first transportation plate 3-1 is deflected in the third direction DR3 or the fourth direction DR4.

In a transportation plate 3' in a comparative example (see FIG. 5), the entirety of the first middle portion 3m-1 is a flat portion. In this case, the thermal deformation of the transportation plate 3' resulting from an increase in temperature is larger than that of a case where the first middle portion 3m-1 includes the first concave portion Q1. In particular, the thermal deformation of the transportation plate 3' may become excessive depending on the condition, such as (1) the output of the laser beam LB is high (or the energy density of the laser beam LB is high), (2) the length of the transportation plate 3' in a direction along the first direction DR1 is long, (3) the area of the first middle portion 3m-1 (in other words, the area of the flat portion) is large, and/or (4) the workpiece and the dross transportation conveyor are close in distance to each other. In addition, when the thermal deformation of the transportation plate 3' becomes excessive, smooth movement of the group of transportation plates including the transportation plate 3' may be hindered.

In the dross transportation conveyor 2A according to the first embodiment, the first concave portion Q1 eliminates or minimizes excessive deflection, of the first transportation plate 3-1 in the third direction DR3 or the fourth direction DR4, resulting from the irradiation of the laser beam. Therefore, it becomes possible to smoothly move the group of transportation plates 3 including the first transportation plate 3-1.

As illustrated in FIG. 1, the laser beam machine apparatus 1A according to the first embodiment includes: the above-described dross transportation conveyor 2A; the laser beam irradiator 60 including a laser head 61, which irradiates the workpiece W with the laser beam LB; a mover 7, which moves the laser head 61 relative to a workpiece support member 90 for supporting the workpiece W; and a controller 8, which controls the laser beam irradiator 60 and the mover 7. It is to be noted that one computer may function as the controller 8, or a plurality of computers may cooperate with each other to function as the controller 8.

The laser beam machine apparatus 1A according to the first embodiment has the same effects as those of the dross transportation conveyor 2A according to the first embodiment.

### (Optional and Additional Configurations)

Subsequently, referring to FIGs. 1 to 35, optional and additional configurations that are adoptable in the dross transportation conveyor 2A and the laser beam machine apparatus 1A according to the first embodiment (or a dross transportation conveyor 2B and a laser beam machine apparatus 1B according to a second embodiment to be described later) will be described.

### (First Concave portion Q1)

In the example illustrated in FIG. 3, the first concave portion Q1 is a concave portion that is concave in the fourth direction DR4. In other words, the first concave portion Q1 is a concave portion that is concave in a direction from the first transportation surface 3u-1 of the first transportation plate 3-1 toward the first back surface 3n-1 of the first transportation plate 3-1. In the example illustrated in FIG. 3, the first concave portion Q1 is located further in the fourth direction DR4 than the first front end portion 3f-1. In addition, the first concave portion Q1 is located further in the fourth direction DR4 than the first rear end portion 3e-1. The first concave portion Q1 has a transportation surface for transporting the dross and a back surface disposed on an opposite side of the transportation surface.

The transportation surface of the first concave portion Q1 is a concave-shaped transportation surface SD1, which is concave in the fourth direction DR4. In the example illustrated in FIG. 3, the concave-shaped transportation surface SD1 has a substantially arc shape in a cross-section perpendicular to the first direction DR1. Alternatively, the concave-shaped transportation surface SD1 may have a substantially letter V shape, a substantially letter U shape, or any other shape in the cross-section perpendicular to the first direction DR1.

The back surface of the first concave portion Q1 is a protrusion surface SN1, which protrudes in the fourth direction DR4. In the example illustrated in FIG. 3, the protrusion surface SN1 has a substantially arc shape in the cross-section perpendicular to the first direction DR1. Alternatively, the protrusion surface SN1 may have a substantially letter V shape, a substantially letter U shape, or any other shape in the cross-section perpendicular to the first direction DR1.

As illustrated in FIG. 6, when the first concave portion Q1 of the first transportation plate 3-1 is irradiated with the laser beam LB, the first middle portion 3m-1 (or the first transportation plate 3-1) is thermally deflected in the fourth direction DR4. It is to be noted that in FIG. 6, the amount of deflection of the first transportation plate 3-1 is displayed in an exaggerated manner in comparison with an actual amount of deflection.

As illustrated in FIG. 7, when the first front end portion 3f-1 of the first transportation plate 3-1 is irradiated with the laser beam LB, the first front end portion 3f-1 (or the first transportation plate 3-1) is thermally deflected in the third direction DR3. It is to be noted that in FIG. 7, the amount of deflection of the first transportation plate 3-1 is displayed in an exaggerated manner in comparison with the actual amount of deflection.

In the examples illustrated in FIGs. 6 and 7, the direction in which the first front end portion 3f-1 of the first transportation plate 3-1 is thermally deflected by the irradiation of the laser beam on the first front end portion 3f-1 is opposite to the direction in which the first middle portion 3m-1 is thermally deflected by the irradiation of the laser beam on the first concave portion Q1. Thus, when the first transportation plate 3-1 moves in the second direction DR2 to traverse the laser beam LB, the deflection resulting from the irradiation of the laser beam on the first front end portion 3f-1 is at least partially cancelled out by the deflection resulting from the irradiation of the laser beam on the first middle portion 3m-1. In this manner, the amount of deflection of the first transportation plate 3-1 as a whole is reduced, and a change in relative position between the first rear end portion 3e-1 of the first transportation plate 3-1 and the second front end portion 3f-2 of the second transportation plate 3-2 is eliminated or minimized. As a result, it becomes possible to smoothly move the group of transportation plates 3, which includes the first transportation plate 3-1.

### (Dross Transportation Conveyor 2A)

In the example illustrated in FIG. 1, the dross transportation conveyor 2A is partially disposed immediately below the laser beam irradiator 60. In addition, the group of transportation plates 3 of the dross transportation conveyor 2A is configured to be movable across the machine region RG1 (more specifically, a region immediately below the laser beam irradiator 60).

In the example illustrated in FIG. 1, the group of transportation plates 3 transports the dross from the machine region RG1 to a discharge region RG2. In the example illustrated in FIG. 1, each transportation plate 3 in the group of transportation plates 3 is reversed (more specifically, makes a turn by 180 degrees around a horizontal shaft) in the discharge region RG2. As a result, the dross D transported by the group of transportation plates 3 is discharged to a container 13 from the group of transportation plates 3 in the discharge region RG2. It is to be noted that when the cut-off pieces CF (see FIG. 2) are transported by the group of transportation plates 3, the cut-off pieces CF are also discharged to the container 13 from the group of transportation plates 3 in the discharge region RG2.

In an example illustrated in FIG. 8, the dross transportation conveyor 2A includes: a first endless component 21; a second endless component 22; and a driver 29. The first endless component 21 and the second endless component 22 support the group of transportation plates 3. More specifically, the group of transportation plates 3 is attached to the first endless component 21 and the second endless component 22.

The first endless component 21 and the second endless component 22 are directly or indirectly driven by the driver 29. More specifically, the first endless component 21 is driven to move along a first circling orbit B1 (see FIG. 9) directly or indirectly by the driver 29, and the second endless component 22 is driven to move along a second circling orbit B2 (see FIG. 9), which is parallel to the first circling orbit B1, directly or indirectly by the driver 29. A gap G1 between the first circling orbit B1 and the second circling orbit B2 (in other words, a distance between the first circling orbit B1 and the second circling orbit B2 in the direction along the first direction DR1) is, for example, equal to or longer than one meter and equal to or shorter than three meters.

In an example illustrated in FIG. 10, the first endless component 21 is a first endless chain 21a, and the second endless component 22 is a second endless chain 22a. In the example illustrated in FIG. 10, the dross transportation conveyor 2 includes a plurality of sprockets 28, which includes a first sprocket 28a, a second sprocket 28b, a third sprocket 28c, and a fourth sprocket 28d. The first endless chain 21a is engaged with at least the first sprocket 28a and the second sprocket 28b (more specifically, the first endless chain 21a is wound around at least the first sprocket 28a and the second sprocket 28b). In addition, the second endless chain 22a is engaged with at least the third sprocket 28c and the fourth sprocket 28d (more specifically, the second endless chain 22a is wound around at least the third sprocket 28c and the fourth sprocket 28d).

In the example illustrated in FIG. 10, the first endless chain 21a is driven by the driver 29 via at least the first sprocket 28a, and the second endless chain 22a is driven by the driver 29 via at least the third sprocket 28c.

The group of transportation plates 3 moves along the circling orbit OB. As illustrated in FIG. 9, the circling orbit OB of the group of transportation plates 3 is parallel to the first circling orbit B1 of the first endless chain 21a, and is parallel to the second circling orbit B2 of the second endless chain 22a.

### (Group of Transportation Plates 3)

As illustrated in FIG. 2, each transportation plate 3 in the group of transportation plates 3 transports some of a plurality of pieces of dross D, which are generated by the irradiation of the laser beam LB on the workpiece W, and the temperature of each transportation plate 3 is raised by the laser beam LB. For example, the first transportation plate 3-1 and the second transportation plate 3-2 each transport some of the plurality of pieces of dross D, which are generated by the irradiation of the laser beam LB on the workpiece W, and the temperature of each transportation plate 3 is raised by the laser beam LB. Each transportation plate 3 in the group of transportation plates 3 may be made up of one component, or may be made up of an assembly of a plurality of components.

In an example illustrated in FIG. 2, the dross transportation conveyor 2A include the group of transportation plates 3, which includes the first transportation plate 3-1, the second transportation plate 3-2, and the third transportation plate 3-3. Each transportation plate 3 in the group of transportation plates 3 extends along the first direction DR1. The number of the transportation plates 3 included in the group of transportation plates 3 is, for example, equal to or larger than 20, equal to or larger than 50, or equal to or larger than 80. Herein, "N" is defined as the number of the transportation plates 3 included in the group of transportation plates 3. "N" is, for example, a natural number equal to or larger than 20.

In a case where "K" is defined as any natural number equal to or larger than 1 and equal to or smaller than "N-1", the (K+1)-th transportation plate is disposed to be adjacent to the K-th transportation plate. In addition, the first transportation plate 3-1 is disposed to be adjacent to the N-th transportation plate. In this manner, the group of transportation plates 3 is disposed in an annular shape as a whole. For example, the second transportation plate 3-2 is disposed to be adjacent to the first transportation plate 3-1, and is also disposed to be adjacent to the third transportation plate 3-3.

Each transportation plate 3 in the group of transportation plates 3 includes: a front end portion 3f; a rear end portion 3e; and a middle portion 3m, which connects the front end portion 3f with the rear end portion 3e. It is to be noted that in an example illustrated in FIG. 2, the front end portion 3f of each transportation plate 3 is a front end portion in the moving direction (in other words, an end portion in the second direction DR2), and the rear end portion 3e of each transportation plate 3 is a rear end portion in the moving direction (in other words, an end portion opposite to the second direction DR2).

In the example illustrated in FIG. 2, the front end portion 3f of each transportation plate 3 is disposed to overlap the rear end portion 3e of another transportation plate 3, which is disposed to be adjacent in a plan view (in other words, when viewed in a direction along the fourth direction DR4), and the rear end portion 3e of each transportation plate 3 is disposed to overlap the front end portion 3f of further another transportation plate disposed to be adjacent in the plan view (in other words, when viewed in the direction along the fourth direction DR4).

For example, the first front end portion 3f-1 of the first transportation plate 3-1 is disposed to overlap a rear end portion 3e-N of another transportation plate 3-N in the plan view (in other words, when viewed in the direction along the fourth direction DR4). More specifically, the rear end portion 3e-N of such another transportation plate 3-N is covered with the first front end portion 3f-1 of the first transportation plate 3-1.

For example, the first rear end portion 3e-1 of the first transportation plate 3-1 is disposed to overlap the second front end portion 3f-2 of the second transportation plate 3-2 in the plan view (in other words, when viewed in the direction along the fourth direction DR4). More specifically, the first rear end portion 3e-1 of the first transportation plate 3-1 is covered with the second front end portion 3f-2 of the second transportation plate 3-2.

For example, the second rear end portion 3e-2 of the second transportation plate 3-2 is disposed to overlap a third front end portion 3f-3 of the third transportation plate 3-3 in the plan view (in other words, when viewed in the direction along the fourth direction DR4). More specifically, the second rear end portion 3e-2 of the second transportation plate 3-2 is covered with the third front end portion 3f-3 of the third transportation plate 3-3.

As illustrated in FIG. 11, each transportation plate 3 in the group of transportation plates 3 includes a left end portion 3a and a right end portion 3b. In an example illustrated in FIG. 11, the left end portion 3a of each transportation plate 3 is an end portion on the left, when the transportation surface 3u of the transportation plate 3 is viewed in a direction from the rear end portion 3e toward the front end portion 3f, and the right end portion 3b of each transportation plate 3 is an end portion on the right, when the transportation surface 3u of the transportation plate 3 is viewed in the direction from the rear end portion 3e toward the front end portion 3f.

The first transportation plate 3-1 includes: the first front end portion 3f-1; the first rear end portion 3e-1; the first middle portion 3m-1, which connects the first front end portion 3f-1 with the first rear end portion 3e-1; a left end portion 3a-1; and a right end portion 3b-1.

The second transportation plate 3-2 includes: the second front end portion 3f-2; the second rear end portion 3e-2; the second middle portion 3m-2, which connects the second front end portion 3f-2 with the second rear end portion 3e-2; a left end portion 3a-2; and a right end portion 3b-2.

The third transportation plate 3-3 includes: the third front end portion 3f-3; a third rear end portion 3e-3; a third middle portion 3m-3, which connects the third front end portion 3f-3 with the third rear end portion 3e-3; a left end portion 3a-3; and a right end portion 3b-3.

The length (more specifically, the length in the direction along the first direction DR1) of each transportation plate 3 in the group of transportation plates 3 is, for example, equal to or longer than one meter and equal to or shorter than three meters. A length L1 of the first transportation plate 3-1 is, for example, equal to or longer than one meter and equal to or shorter than three meters, and the length of the second transportation plate 3-2 is, for example, equal to or longer than one meter and equal to or shorter than three meters.

The width of each transportation plate 3 in the group of transportation plates 3 (more specifically, the width of each transportation plate 3 in the group of transportation plates 3 in a direction along the second direction DR2) is, for example, equal to or larger than 40 millimeters and equal to or smaller than 200 millimeters. A width W1 of the first transportation plate 3-1 is, for example, equal to or larger than 40 millimeters and equal to or smaller than 200 millimeters, and a width W2 of the second transportation plate 3-2 is, for example, equal to or larger than 40 millimeters and equal to or smaller than 200 millimeters.

The plate thickness of each transportation plate 3 in the group of transportation plates 3 is, for example, equal to or smaller than five millimeters or equal to or smaller than three millimeters. In the example illustrated in FIG. 3, the plate thickness of the first front end portion 3f-1 of the first transportation plate 3-1 is substantially constant, and the plate thickness of the first rear end portion 3e-1 of the first transportation plate 3-1 is substantially constant. In addition, the plate thickness of the first middle portion 3m-1 of the first transportation plate 3-1 is substantially constant. In the example illustrated in FIG. 3, the plate thickness of the first transportation plate 3-1 is substantially constant as a whole.

Each transportation plate 3 in the group of transportation plates 3 is made of metal. Each transportation plate 3 in the group of transportation plates 3 is made of, for example, steel, more specifically, a hot-rolled mild steel plate, a cold-rolled steel plate, or a cold-rolled stainless steel plate.

The left end portion 3a of each transportation plate 3 in the group of transportation plates 3 is attached to the first endless component 21 (more specifically, the first endless chain 21a). In addition, the right end portion 3b of each transportation plate 3 in the group of transportation plates 3 is attached to the second endless component 22 (more specifically, the second endless chain 22a).

In the example illustrated in FIG. 11, a hole portion h1 into which a bolt is insertable is formed in the left end portion 3a-1 of the first transportation plate 3-1, and a hole portion h2 into which a bolt is insertable is formed in the right end portion 3b-1 of the first transportation plate 3-1. In an example illustrated in FIG. 12, the left end portion 3a-1 of the first transportation plate 3-1 is attached to the first endless chain 21a via a bolt BT, and the right end portion 3b-1 of the first transportation plate 3-1 is attached to the second endless chain 22a via a bolt BT. As can be understood from FIG. 2, the first transportation plate 3-1 is not coupled to another adjacent transportation plate. Therefore, when the first transportation plate 3-1 is damaged, the first transportation plate 3-1 can be easily replaced with a new first transportation plate.

In the example illustrated in FIG. 11, the front end portion 3f of each transportation plate 3 in the group of transportation plates 3 includes a convex-shaped curved portion CP, which extends in the first direction DR1. It is to be noted that in the example illustrated in FIG. 11, the front end portion 3f of each transportation plate 3 in the group of transportation plates 3 has a substantially arc shape in the cross-section perpendicular to the first direction DR1. Alternatively, the front end portion 3f of each transportation plate 3 in the group of transportation plates 3 may have a substantially letter V shape, a substantially letter U shape, or any other shape in the cross-section perpendicular to the first direction DR1. It is to be noted that an inverted letter V shape corresponds to a letter V shape, when viewed from a different direction. Thus, herein, the substantially inverted letter V shape is included in the substantially letter V shape. Similarly, an inverted letter U shape corresponds to a letter U shape when viewed from a different direction. Thus, herein, the substantially inverted letter U shape is included in the substantially letter U shape.

In the example illustrated in FIG. 11, the rear end portion 3e of each transportation plate 3 in the group of transportation plates 3 includes an upright portion TP, which projects in the third direction DR3. As illustrated in FIG. 13, the upright portion TP scrapes out the dross D under the convex-shaped curved portion CP of its subsequent transportation plate, when each transportation plate 3 turns around. For example, the upright portion TP of the first transportation plate 3-1 scrapes out the dross D under a convex-shaped curved portion CP2 of the second transportation plate 3-2, when the first transportation plate 3-1 turns around. It is to be noted that in the first embodiment, the shape of the rear end portion 3e of each transportation plate 3 in the group of transportation plates 3 is not limited to the example illustrated in FIG. 13. For example, the rear end portion 3e of each transportation plate 3 in the group of transportation plates 3 may have a substantially arc shape or a substantially circular shape when viewed in the direction along the first direction DR1.

Hereinafter, some examples of the transportation plate 3 will be described, but the transportation plate 3 is not limited to such some examples to be described below. In addition, the first transportation plate 3-1 and the second transportation plate 3-2 among the plurality of transportation plates 3 will be representatively described, but it is needless to say that the same configuration with that of the first transportation plate 3-1 is applicable to the other transportation plates.

### (First Example of Transportation Plate 3)

In an example illustrated in FIGs. 14 and 15, the first front end portion 3f-1 of the first transportation plate 3-1 includes a convex-shaped curved portion CP1, which is convex in the third direction DR1, and which extends in the first direction DR1. In a case where the first front end portion 3f-1 includes the convex-shaped curved portion CP1, the section modulus of the third direction DR3 becomes large. Thus, the deflection of the first transportation plate 3-1 resulting from the irradiation of the laser beam is eliminated or minimized, as compared with a case where the entirety of the first front end portion 3f-1 is a flat portion.

In the example illustrated in FIG. 14, the first transportation plate 3-1 includes: the convex-shaped curved portion CP1 (more specifically, the convex-shaped curved portion CP1, which is convex in the third direction DR3); and the first concave portion Q1 (more specifically, the concave-shaped curved portion QP1, which is concave in the fourth direction DR4). The convex-shaped curved portion CP1 has, for example, a substantially arc shape when viewed in the direction along the first direction DR1. The concave-shaped curved portion QP1 has, for example, a substantially arc shape when viewed in the direction along the first direction DR1.

In the example illustrated in FIG. 14, a boundary portion C1 between the convex-shaped curved portion CP1 and the first concave portion Q1 (more specifically, the concave-shaped curved portion QP1) serves as a boundary portion between the first front end portion 3f-1 and the first middle portion 3m-1. In the example illustrated in FIG. 14, the convex-shaped curved portion CP1 and the first concave portion Q1 (more specifically, the concave-shaped curved portion QP1) are directly connected with each other. Alternatively, as illustrated in FIG. 16, a first flat plate portion FP1-1 may be interposed between the convex-shaped curved portion CP1 and the first concave portion Q1 (more specifically, the concave-shaped curved portion QP1). In an example illustrated in FIG. 16, a front edge of the first flat plate portion FP1-1 is connected with the convex-shaped curved portion CP1, and a rear edge of the first flat plate portion FP1-1 is connected through a bent portion BC1 with the first concave portion Q1.

In the examples illustrated in FIGs. 14 and 15, the first rear end portion 3e-1 of the first transportation plate 3-1 includes a first upright portion TP1, which projects in the third direction DR3. The first upright portion TP1 extends in the first direction DR1. In a case where the first rear end portion 3e-1 includes the first upright portion TP1, the section modulus of the third direction DR3 is large, and thus the deflection of the first transportation plate 3-1 resulting from the irradiation of the laser beam is eliminated or minimized by the first upright portion TP1. Alternatively, the first rear end portion 3e-1 of the first transportation plate 3-1 may have a substantially arc shape or a substantially circular shape when viewed in the direction along the first direction DR1.

In the example illustrated in FIGs. 14 and 15, the first middle portion 3m-1 of the first transportation plate 3-1 and the first rear end portion 3e-1 (more specifically, the first upright portion TP1) of the first transportation plate 3-1 are connected with each other through a first bent portion BA1. The first bent portion BA1 extends in the first direction DR1. In the example illustrated in FIG. 14, the first bent portion BA1 serves as a boundary portion between the first middle portion 3m-1 and the first rear end portion 3e-1.

In the example illustrated in FIG. 15, the first front end portion 3f-1 of the first transportation plate 3-1 includes a convex-shaped transportation surface SU1, which is convex in the third direction DR3. The convex-shaped transportation surface SU1 constitutes a part of the first transportation surface 3u-1 of the first transportation plate 3-1. The convex-shaped transportation surface SU1 extends in the first direction DR1.

In the example illustrated in FIG. 15, the convex-shaped transportation surface SU1 has a substantially arc shape when viewed in the direction along the first direction DR1. Alternatively, the convex-shaped transportation surface SU1 may have a substantially letter V shape, a substantially letter U shape, or any other shape when viewed in the direction along the first direction DR1. In addition, the convex-shaped transportation surface SU1 has a substantially arc shape in the cross-section perpendicular to the first direction DR1. Alternatively, the convex-shaped transportation surface SU1 may have a substantially letter V shape, a substantially letter U shape, or any other shape in the cross-section perpendicular to the first direction DR1.

As illustrated in FIG. 7, when the convex-shaped curved portion CP1 (or the convex-shaped transportation surface SU1) of the first transportation plate 3-1 is irradiated with the laser beam LB, the first front end portion 3f-1 (or the first transportation plate 3-1) is thermally deflected in the third direction DR3.

In the example illustrated in FIG. 15, the first middle portion 3m-1 (more specifically, the first concave portion Q1) of the first transportation plate 3-1 includes the concave-shaped transportation surface SD1, which is concave in the fourth direction DR4. The concave-shaped transportation surface SD1 constitutes a part of the first transportation surface 3u-1 of the first transportation plate 3-1. The concave-shaped transportation surface SD1 extends in the first direction DR1.

In the example illustrated in FIG. 15, the concave-shaped transportation surface SD1 has a substantially arc shape when viewed in the direction along the first direction DR1. Alternatively, the concave-shaped transportation surface SD1 may have a substantially letter V shape, a substantially letter U shape, or any other shape when viewed in the direction along the first direction DR1. In addition, the concave-shaped transportation surface SD1 has a substantially arc shape in the cross-section perpendicular to the first direction DR1. Alternatively, the concave-shaped transportation surface SD1 may have a substantially letter V shape, a substantially letter U shape, or any other shape in the cross-section perpendicular to the first direction DR1.

As illustrated in FIG. 6, when the first concave portion Q1 (or the concave-shaped transportation surface SD1) of the first transportation plate 3-1 is irradiated with the laser beam LB, the first middle portion 3m-1 (or the first transportation plate 3-1) is thermally deflected in the fourth direction DR4.

The direction in which the first front end portion 3f-1 is thermally deflected by the irradiation of the laser beam LB on the convex-shaped curved portion CP1 (or the convex-shaped transportation surface SUI) of the first transportation plate 3-1 and the direction in which the first middle portion 3m-1 is thermally deflected by the irradiation of the laser beam LB on the first concave portion Q1 (or the concave-shaped transportation surface SD1) are opposite to each other. In the first transportation plate 3-1, the thermal deformation of the first front end portion 3f-1 and the thermal deformation of the first middle portion 3m-1 are relatively canceled out, and thus the deformation of the first transportation plate 3-1 as a whole is eliminated or minimized.

In the example illustrated in FIG. 14, in a plan view (in other words, when viewed in the direction along the fourth direction DR4), the entirety of the first concave portion Q1 (or the entirety of the concave-shaped transportation surface SD1) is disposed between the rear end portion 3e-N of another transportation plate 3-N, which is disposed to be adjacent to the first transportation plate 3-1, and the first rear end portion 3e-1 of the first transportation plate 3-1. As illustrated in FIG. 14, in the plan view (in other words, when viewed in the direction along the fourth direction DR4), the entirety of the first concave portion Q1 (or the entirety of the concave-shaped transportation surface SD1) may be disposed between a rear end edge E1 of another transportation plate 3-N, which is disposed to be adjacent to the first transportation plate 3-1, and a front tip edge E2 of the second transportation plate 3-2.

In the example illustrated in FIG. 14, when viewed in the direction along the first direction DR1, a substantially letter S shape is made up of the first front end portion 3f-1 of the first transportation plate 3-1 and the first concave portion Q1 of the first transportation plate 3-1.

The direction in which such a letter S-shaped portion is thermally deflected by the irradiation of the laser beam LB on a part of the letter S-shaped portion and the direction in which the letter S-shaped portion is thermally deflected by the irradiation of the laser beam LB on another part of the letter S-shaped portion are opposite to each other. The thermal deformation of a part of the letter S-shaped portion of the first transportation plate 3-1 and the thermal deformation of another part of the S-shaped portion are relatively canceled out, and thus the deformation of the first transportation plate 3-1 as a whole is eliminated or minimized.

In the example illustrated in FIG. 14, the first middle portion 3m-1 of the first transportation plate 3-1 includes the first concave portion Q1. The first middle portion 3m-1 also includes the flat plate portion FP1 in addition to the first concave portion Q1. As illustrated in FIG. 15, the flat plate portion FP1 extends in the first direction DR1.

In the case where the first middle portion 3m-1 includes the first concave portion Q1 in addition to the flat plate portion FP1, it becomes possible to reduce the area of the flat plate portion FP1, as compared with a case where the entirety of the first middle portion 3m-1 is a flat portion. Therefore, it becomes possible to relatively reduce the thermal deformation resulting from the irradiation of the laser beam LB on the flat plate portion FP1.

In the example illustrated in FIGs. 14 and 15, the first concave portion Q1 and the flat plate portion FP1 are connected with each other through a bent portion BB1. The bent portion BB1 extends in the first direction DR1. In a case where the bent portion BB1 is disposed between the first concave portion Q1 and the flat plate portion FP1, the deflection of the first transportation plate 3-1 resulting from the irradiation of the laser beam is eliminated or minimized by the bent portion BB1.

In the example illustrated in FIG. 14, the front tip edge E2 of the second transportation plate 3-2 is disposed to face the flat plate portion FP1. In the example illustrated in FIG. 14, a labyrinth passage including a gap between the front tip edge E2 of the second transportation plate 3-2 and the flat plate portion FP1 of the first transportation plate 3-1 and a gap between the second front end portion 3f-2 of the second transportation plate 3-2 and the first rear end portion 3e-1 of the first transportation plate 3-1 is formed, and thus dropping of the dross from the first transportation plate 3-1 and the second transportation plate 3-2 is eliminated or minimized.

In the example illustrated in FIG. 15, the second front end portion 3f-2 of the second transportation plate 3-2 includes the convex-shaped curved portion CP2, which is convex in the third direction DR1, and which extends in the first direction DR1.

In the example illustrated in FIG. 15, the second transportation plate 3-2 includes a second concave portion Q2, which is concave in the fourth direction DR4, in addition to the convex-shaped curved portion CP2. More specifically, the second front end portion 3f-2 of the second transportation plate 3-2 includes the convex-shaped curved portion CP2, which is convex in the third direction DR1, and which extends in the first direction DR1, and the second middle portion 3m-2 of the second transportation plate 3-2 includes a second concave portion Q2 (more specifically, a concave-shaped curved portion QP2), which is concave in the fourth direction DR4, and which extends in the first direction DR1.

In the example illustrated in FIG. 15, the second rear end portion 3e-2 of the second transportation plate 3-2 includes a second upright portion TP2, which projects in the third direction DR3, and which extends in the first direction DR1.

In the example illustrated in FIG. 15, the second middle portion 3m-2 of the second transportation plate 3-2 and the second rear end portion 3e-2 of the second transportation plate 3-2 are connected with each other through a second bent portion BA2, which extends in the first direction DR1.

In the example illustrated in FIG. 15, the second front end portion 3f-2 of the second transportation plate 3-2 includes a convex-shaped transportation surface SU2, which is convex in the third direction DR1, and which extends in the first direction DR1. The convex-shaped transportation surface SU2 constitutes a part of the second transportation surface 3u-2 of the second transportation plate 3-2.

In the example illustrated in FIG. 15, the second middle portion 3m-2 (more specifically, the second concave portion Q2) of the second transportation plate 3-2 includes a concave-shaped transportation surface SD2, which is concave in the fourth direction DR4, and which extends in the first direction DR1. The concave-shaped transportation surface SD2 constitutes a part of the second transportation surface 3u-2 of the second transportation plate 3-2.

As illustrated in FIG. 14, in the plan view (in other words, when viewed in the direction along the fourth direction DR4), the entirety of the second concave portion Q2 (or the entirety of the concave-shaped transportation surface SD2) may be disposed between a rear end edge E3 of the first transportation plate 3-1 and a front tip edge E4 of the third transportation plate 3-3.

In the example illustrated in FIG. 14, when viewed in the direction along the first direction DR1, a substantially letter S shape is made up of the second front end portion 3f-2 of the second transportation plate 3-2 and the second concave portion Q2 of the second transportation plate 3-2.

In the example illustrated in FIG. 14, the second middle portion 3m-2 of the second transportation plate 3-2 includes a flat plate portion FP2 in addition to the second concave portion Q2. The flat plate portion FP2 extends in the first direction DR1. In the example illustrated in FIG. 15, the second concave portion Q2 and the flat plate portion FP2 are connected with each other through a bent portion BB2, which extends in the first direction DR1.

### (Second Example of Transportation Plate 3)

In an example illustrated in FIGs. 17 and 18, the shape of the concave portion of the middle portion of each transportation plate 3 in the group of transportation plates 3 is different from that in the example illustrated in FIGs. 14 and 15. In a second example of the transportation plate 3, the shapes of the front end portion and the rear end portion of each transportation plate 3 in the group of transportation plates 3 are the same as those of the front end portion and the rear end portion of each transportation plate 3 in the group of transportation plates 3 in the first example of the transportation plate 3. Therefore, repeated descriptions of the shapes of the front end portion and the rear end portion of each transportation plate 3 in the group of transportation plates 3 will be omitted.

In the example illustrated in FIG. 17, the first middle portion 3m-1 of the first transportation plate 3-1 includes the first concave portion Q1. The first concave portion Q1 is concave in the fourth direction DR4, and extends in the first direction DR1.

In the example illustrated in FIG. 14, the first concave portion Q1 has a substantially arc shape in the cross-section perpendicular to the first direction DR1. In contrast, in the example illustrated in FIG. 17, the first concave portion Q1 has a substantially letter V shape in the cross-section perpendicular to the first direction DR1. In addition, the first concave portion Q1 has a substantially letter V shape, when viewed in the direction along the first direction DR1.

In the example illustrated in FIG. 18, the first middle portion 3m-1 (more specifically, the first concave portion Q1) of the first transportation plate 3-1 includes the concave-shaped transportation surface SD1, which is concave in the fourth direction DR4. The concave-shaped transportation surface SD1 extends in the first direction DR1. The concave-shaped transportation surface SD1 constitutes a part of the first transportation surface 3u-1 of the first transportation plate 3-1. In the example illustrated in FIG. 18, the concave-shaped transportation surface SD1 has an arc shape of a substantially letter V when viewed in the direction along the first direction DR1. In addition, the concave-shaped transportation surface SD1 has a substantially letter V shape in the cross-section perpendicular to the first direction DR1.

In the example illustrated in FIG. 18, the first middle portion 3m-1 of the first transportation plate 3-1 includes the flat plate portion FP1 in addition to the first concave portion Q1. The flat plate portion FP1 extends in the first direction DR1. The first middle portion 3m-1 may include the first flat plate portion FP1-1 and a second flat plate portion FP1-2.

In the example illustrated in FIG. 18, the flat plate portion FP1 (more specifically, the first flat plate portion FP1-1) and the front edge of the first concave portion Q1 are connected with each other through the bent portion BC1. In the example illustrated in FIG. 18, the rear edge of the first concave portion Q1 and the flat plate portion FP1 (more specifically, the second flat plate portion FP1-2) are connected with each other through the bent portion BB1.

In the example illustrated in FIG. 18, the second front end portion 3f-2 of the second transportation plate 3-2 includes the convex-shaped curved portion CP2 (more specifically, the convex-shaped curved portion CP2, which is convex in the third direction DR3). In addition, the second middle portion 3m-2 of the second transportation plate 3-2 includes the second concave portion Q2. The second concave portion Q2 is concave in the fourth direction DR4, and extends in the first direction DR1.

Since the shape of the second concave portion Q2 is the same as that of the first concave portion Q1, the repeated description of the shape of the second concave portion Q2 will be omitted.

### (Third Example of Transportation Plate 3)

In an example illustrated in FIGs. 19 and 20, the shape of the concave portion of the middle portion of each transportation plate 3 in the group of transportation plates 3 is different from that in the example illustrated in FIGs. 14 and 15. In a third example of the transportation plate 3, the shapes of the front end portion and the rear end portion of each transportation plate 3 in the group of transportation plates 3 are the same as those of the front end portion and the rear end portion of each transportation plate 3 in the group of transportation plates 3 in the first example of the transportation plate 3. Therefore, repeated descriptions of the shapes of the front end portion and the rear end portion of each transportation plate 3 in the group of transportation plates 3 will be omitted.

In the example illustrated in FIG. 19, the first middle portion 3m-1 of the first transportation plate 3-1 includes the first concave portion Q1. The first concave portion Q1 is concave in the fourth direction DR4, and extends in the first direction DR1.

In the example illustrated in FIG. 19, the first concave portion Q1 has a substantially letter U shape in the cross-section perpendicular to the first direction DR1. When viewed in the direction along the first direction DR1, the first concave portion Q1 has a substantially letter U shape.

In the example illustrated in FIG. 20, the first middle portion 3m-1 (more specifically, the first concave portion Q1) of the first transportation plate 3-1 includes the concave-shaped transportation surface SD1, which is concave in the fourth direction DR4. The concave-shaped transportation surface SD1 extends in the first direction DR1. The concave-shaped transportation surface SD1 constitutes a part of the first transportation surface 3u-1 of the first transportation plate 3-1. In the example illustrated in FIG. 20, the concave-shaped transportation surface SD1 has an arc shape of a substantially letter U when viewed in the direction along the first direction DR1. In addition, the concave-shaped transportation surface SD1 has a substantially letter U shape in the cross-section perpendicular to the first direction DR1.

In the example illustrated in FIG. 20, the first middle portion 3m-1 of the first transportation plate 3-1 includes the flat plate portion FP1 in addition to the first concave portion Q1. The flat plate portion FP1 extends in the first direction DR1. The first middle portion 3m-1 may include the first flat plate portion FP1-1 and the second flat plate portion FP1-2.

In the example illustrated in FIG. 20, the flat plate portion FP1 (more specifically, the first flat plate portion FP1-1) and the front edge of the first concave portion Q1 are connected with each other through the bent portion BC1. Also in the example illustrated in FIG. 20, the rear edge of the first concave portion Q1 and the flat plate portion FP1 (more specifically, the second flat plate portion FP1-2) are connected with each other through the bent portion BB1.

In the example illustrated in FIG. 20, the second front end portion 3f-2 of the second transportation plate 3-2 includes the convex-shaped curved portion CP2 (more specifically, the convex-shaped curved portion CP2, which is convex in the third direction DR3). The convex-shaped curved portion CP2 extends in the first direction DR1. In addition, the second middle portion 3m-2 of the second transportation plate 3-2 includes the second concave portion Q2. The second concave portion Q2 is concave in the fourth direction DR4, and extends in the first direction DR1.

Since the shape of the second concave portion Q2 is the same as that of the first concave portion Q1, the repeated description of the shape of the second concave portion Q2 will be omitted.

### (Fourth Example of Transportation Plate 3)

In the examples illustrated in FIGs. 14, 16, 17, and 19, the first middle portion 3m-1 of the first transportation plate 3-1 includes one first concave portion Q1. Alternatively, as illustrated in FIG. 21, the first middle portion 3m-1 may include two or more first concave portions Q1. In an example illustrated in FIG. 21, the first middle portion 3m-1 includes a first concave portion Q1-1 and another first concave portion Q1-2, which is disposed further in the second direction DR2 in the first concave portion Q1. The first concave portion Q1-1 is concave in the fourth direction DR4 and extends in the first direction DR1. Such another first concave portion Q1-2 is concave in the fourth direction DR4 and extends in the first direction DR1.

In the example illustrated in FIG. 21, each first concave portion Q1 has a substantially arc shape when viewed in the direction along the first direction DR1. Alternatively, each first concave portion Q1 may have a substantially letter V shape or a substantially letter U shape when viewed in the direction along the first direction DR1.

The mode in which the first middle portion 3m-1 of the first transportation plate 3-1 includes another first concave portion Q1-2 in addition to the first concave portion Q1-1 is adoptable in any of the first example, the second example, and the third example of the above-described transportation plate 3, or a fifth example of the transportation plate 3 to be described below.

### (Fifth Example of Transportation Plate 3)

In an example illustrated in FIG. 22, at least a part of the first transportation surface 3u-1 of the first transportation plate 3-1 is made up of a surface of a laser beam reflection layer 4-1. In the example illustrated in FIG. 22, the first transportation plate 3-1 includes a first base member 35-1 and the laser beam reflection layer 4-1, which covers at least a part of the first base member 35-1. The laser beam reflection layer 4-1 is made of a material having high laser reflectivity (for example, copper). The first base member 35-1 is made of, for example, steel, more specifically, a hot-rolled mild steel plate, a cold-rolled steel plate, or a cold-rolled stainless steel plate.

The laser reflectivity of the laser beam reflection layer 4-1 is higher than the laser reflectivity of the first base member 35-1 of the first transportation plate 3-1. It is to be noted that in the first embodiment (or a second embodiment to be described later), the wavelength of the laser beams LB emitted from the laser beam irradiator 60 is, for example, equal to or longer than 1060 nanometers and equal to or shorter than 1080 nanometers. The laser reflectivity of the laser beam reflection layer 4-1 relative to the laser beam having the wavelength equal to or longer than 1060 nanometers and equal to or shorter than 1080 nanometers is, for example, equal to or higher than 70%, equal to or higher than 80%, or equal to or higher than 90%.

In the example illustrated in FIG. 22, a part of the first transportation surface 3u-1 of the first transportation plate 3-1 (for example, the transportation surface of the flat plate portion FP1) is made up of the surface of the laser beam reflection layer 4-1. In addition, another part of the first transportation surface 3u-1 of the first transportation plate 3-1 (for example, the convex-shaped transportation surface SU1 and/or the concave-shaped transportation surface SD1) is made up of a surface having the laser reflectivity lower than the laser reflectivity of the laser beam reflection layer 4-1 (for example, a surface 35u of the first base member 35-1).

Alternatively, as illustrated in FIG. 23, the entirety of the first transportation surface 3u-1 of the first transportation plate 3-1 may be made up of the surface of the laser beam reflection layer 4-1. It is to be noted that in FIG. 23, in order to facilitate the understanding of the laser beam reflection layers (4-1, 4-2), the laser beam reflection layers (4-1, 4-2) are hatched with dots.

In the example illustrated in FIG. 22, the laser beam reflection layer 4-1, which constitutes at least a part of the first transportation surface 3u-1 (for example, a copper layer that constitutes at least a part of the first transportation surface 3u-1), effectively reflects the laser beam LB, which is emitted from the laser beam irradiator 60. In this manner, heat input into the first transportation plate 3-1 is eliminated or minimized, and thus thermal deformation and deflection of the first transportation plate 3-1 are eliminated or minimized.

In the example illustrated in FIG. 22, at least a part of the second transportation surface 3u-2 of the second transportation plate 3-2 is made up of the surface of the laser beam reflection layer 4-2. In the example illustrated in FIG. 22, the second transportation plate 3-2 includes a second base member 35-2 and the laser beam reflection layer 4-2, which covers at least a part of the second base member 35-2. The laser beam reflection layer 4-2 is made of a material having high laser reflectivity (for example, copper). The second base member 35-2 is made of, for example, steel, more specifically, a hot-rolled mild steel plate, a cold-rolled steel plate, or a cold-rolled stainless steel plate.

The mode in which at least a part of the transportation surface 3u of the transportation plates 3 is made up of the surface of the laser beam reflection layer 4 is adoptable in any of the first example, the second example, the third example, and the fourth example of the transportation plates 3.

### (Size of First Concave portion Q1)

When the first transportation plate 3-1 moves in the second direction DR2 to traverse the laser beam LB emitted from the laser beam irradiator 60, the length in the second direction DR2 of the first concave portion Q1 with respect to the length in the second direction DR2 of the first front end portion 3f-1 is preferably set so that the deflection resulting from the irradiation of the laser beam on the first front end portion 3f-1 and the deflection resulting from the irradiation of the laser beam on the first middle portion 3m-1 substantially cancel each other.

As illustrated in FIG. 24, in a plan view (in other words, when viewed in the direction along the fourth direction DR4), the size of the first concave portion Q1 of the first transportation plate 3-1 (in other words, the length in the second direction DR2 of the first concave portion Q1) is, for example, equal to or larger than 1/3 times and equal to or smaller than three times the size of the convex-shaped curved portion CP1 of the first transportation plate 3-1 (in other words, the length in the second direction DR2 of the convex-shaped curved portion CP1), or is equal to or larger than 1/2 times and equal to or smaller than two times the size of the convex-shaped curved portion CP1. In addition, in the plan view (in other words, when viewed in the direction along the fourth direction DR4), the size of the concave-shaped transportation surface SD1 of the first transportation plate 3-1 (in other words, the length in the second direction DR2 of the concave-shaped transportation surface SD1) is, for example, equal to or larger than 1/3 times and equal to or smaller than three times the size of the convex-shaped transportation surface SU1 of the first transportation plate 3-1 (in other words, the length in the second direction DR2 of the convex-shaped transportation surface SU1), or is equal to or larger than 1/2 times and equal to or smaller than two times the size of the convex-shaped transportation surface SU1. It is to be noted that in FIG. 24, in order to facilitate the understanding of the concave-shaped transportation surface SD1, the concave-shaped transportation surface SD1 is hatched with oblique lines. Further, in order to facilitate the understanding of the convex-shaped transportation surface SU1, the convex-shaped transportation surface SU1 is hatched with dots.

In an example illustrated in FIG. 25, a depth L2 of the concave-shaped transportation surface SD1 (more specifically, a distance in a direction along the third direction DR3 between a point E5, which is located furthest in the third direction DR3 of the concave-shaped transportation surface SD1, and a deepest portion E6 of the concave-shaped transportation surface SD1) is larger than a plate thickness T1 of the first concave portion Q1. Such a depth L2 of the concave-shaped transportation surface SD1 is, for example, equal to or larger than two millimeters, equal to or larger than four millimeters, or equal to or larger than six millimeters.

In the example illustrated in FIG. 25, the dross transportation conveyor 2A includes another transportation plate 3-N, which is disposed to be adjacent to the first front end portion 3f-1 of the first transportation plate 3-1. The first transportation plate 3-1 is tiltable relative to such another transportation plates 3-N about a first axis (hereinafter, referred to as a "front tilt axis AX1"). The first transportation plate 3-1 is also tiltable relative to the second transportation plate 3-2 about a second axis (hereinafter, referred to as a "rear tilt axis AX2").

As illustrated in FIG. 25, a first plane PL1 is defined as a plane including both the front tilt axis AX1 of the first transportation plate 3-1 and the rear tilt axis AX2 of the first transportation plate 3-1. In the example illustrated in FIG. 25, the deepest portion E6 of the concave-shaped transportation surface SD1 is located further in the fourth direction DR4 than the first plane PL1.

A distance L3 between the deepest portion E6 of the concave-shaped transportation surface SD1 and the first plane PL1 is, for example, equal to or longer than two millimeters, equal to or longer than four millimeters, or equal to or longer than six millimeters.

In the example illustrated in FIG. 25, an end E7 in the fourth direction DR4 of the first concave portion Q1 is located furthest in the fourth direction DR4 in the entirety of the first transportation plate 3-1.

### (Upward Inclination of Circling Orbit OB)

As illustrated in FIG. 26, the circling orbit OB of the group of transportation plates 3 may include an upward inclination CL having a height that increases from the machine region RG1 toward the discharge region RG2. In a case where the circling orbit OB includes the upward inclination CL, the container 13, which receives the dross D from the dross transportation conveyor 2A, or a second transportation conveyor 15, which receives the dross D from the dross transportation conveyor 2A (see FIG. 32, if necessary), is easily disposed in the discharge region RG2.

### (Laser Beam Machine Apparatus 1A)

As illustrated in FIG. 1, the laser beam machine apparatus 1A includes: the dross transportation conveyor 2A; the laser beam irradiator 60; the mover 7, and the controller 8. Additionally, the laser beam machine apparatus 1A may include the workpiece support member 90.

Since the dross transportation conveyor 2A has already been described, the repeated description of the dross transportation conveyor 2A will be omitted.

As illustrated in FIG. 27, the laser beam irradiator 60 includes the laser head 61. The laser head 61 includes an emission opening OP, which emits the laser beam. The laser beam irradiator 60 may include a laser light source 63 and an optical component 65 (for example, an optical fiber or a similar component) that transmits the laser beam from the laser light source 63 to the laser head 61.

The mover 7 moves the laser head 61 relative to the workpiece support member 90. The mover 7 also moves the laser head 61 relative to the workpiece W, which is supported by the workpiece support member 90. It is to be noted that the workpiece W, which is supported by the workpiece support member 90, is, for example, a plate material.

In an example illustrated in FIG. 27, the mover 7 includes: mover bodies (71a; 73a), which support the laser head 61; and drivers (71b; 73b), which respectively move the mover bodies (71a; 73a).

In the example illustrated in FIG. 27, the mover 7 includes a first mover 71. The first mover 71 includes: a first mover body 71a, which supports the laser head 61; and a first driver 71b (for example, a first motor), which moves the first mover body 71a.

In the example illustrated in FIG. 27, the first mover body 71a functions as a Z saddle, and the first driver 71b functions as a Z-axis driver. The first driver 71b moves the first mover body 71a in a direction parallel to the vertical direction (in other words, Z-axis direction). More specifically, the first driver 71b is capable of moving the first mover body 71a downward so that the first mover body 71a approaches the workpiece support member 90. In addition, the first driver 71b is capable of moving the first mover body 71a upward so that the first mover body 71a moves away from the workpiece support member 90.

In the example illustrated in FIG. 27, the mover 7 includes a second mover 73. The second mover 73 includes: a second mover body 73a, and a second driver 73b (for example, a second motor), which moves the second mover body 73a. The second mover body 73a supports the first mover body 71a to be movable in a direction parallel to the vertical direction.

In the example illustrated in FIG. 27, the second mover body 73a functions as a Y saddle, and the second driver 73b functions as a Y-axis driver. The second driver 73b moves the second mover body 73a in a direction parallel to the horizontal plane (more specifically, Y-axis direction).

In an example illustrated in FIG. 28, the mover 7 includes a third mover 75. The third mover 75 includes: a third mover body 75a; and a third driver 75b (for example, a third motor), which moves the third mover body 75a. The third mover body 75a supports the second mover body 73a to be movable in a direction parallel to Y-axis direction.

In the example illustrated in FIG. 28, the third mover body 75a functions as an X saddle, and the third driver 75b functions as an X-axis driver. The third driver 75b moves the third mover body 75a in a direction parallel to the horizontal plane (more specifically, X-axis direction perpendicular to Z axis and Y axis).

As illustrated in FIG. 27, the third mover body 75a may be made up of a gate-shaped structure. In the example illustrated in FIG. 28, the third mover body 75a is movable to traverse the machine region RG1 in a plan view. The third mover body 75a is supported by a base 70, so that third mover body 75a is movable in a direction parallel to X-axis direction.

In an example illustrated in FIG. 29, the workpiece support member 90 includes a pin support for supporting a workpiece that is a plate material. Such a pin support includes a plurality of top portions 92 for supporting the workpiece W, which is the plate material.

In the example illustrated in FIG. 29, the workpiece support member 90 includes a plurality of plate members 91, each of which is disposed in an upright attitude with respect to a horizontal plane (for example, X-Y plane in FIG. 29). Each of the plurality of plate members 91 includes an edge portion EG having a saw blade shape.

The workpiece support member 90 may include equal to or more than 10 plate members 91, each of which is disposed in an upright attitude with respect to the horizontal plane, or may include equal to or more than 20 plate members 91, each of which is disposed in the upright attitude with respect to the horizontal plane. Each plate member 91 is, for example, made of metal.

In the example illustrated in FIG. 29, the workpiece support member 90 is a pallet PT, which is transportable. The pallet PT includes: a plurality of plate members 91; and a frame body 93, to which the plurality of plate members 91 are attached. A bottom portion of the frame body 93 defines a bottom opening. The dross D, which is generated by the irradiation of the laser beam LB on the workpiece W, passes through a gap between the two adjacent plate members 91 and the bottom opening defined by the frame body 93, and falls toward the dross transportation conveyor 2A.

As illustrated in FIG. 30, the laser beam machine apparatus 1A may include a transferer 11, which transports the workpiece support member 90. The transferer 11 transports the workpiece support member 90 from the machine region RG1 to a removal region RG3. Then, a machined workpiece Wb (more specifically, a machined plate material) is removed from the workpiece support member 90, which is disposed in the removal region RG3. As illustrated in FIG. 31, the machined workpiece Wb may be removed by using a sucker 121, which is capable of sucking the machined workpiece Wb, or may be removed by using a fork capable of scooping up the machined workpiece Wb. Alternatively, the machined workpiece Wb may be removed by a robot or an operator.

In an example illustrated in FIG. 31, the laser beam machine apparatus 1A includes a workpiece transferer 12 (for example, a robot hand), which transports a workpiece before machining and a machined workpiece Wb. The workpiece transferer 12 may be a plate material transferer 12a, which transports a workpiece that is a plate material. The plate material transferer 12a may include a plurality of suckers 121, which suck the workpiece that is the plate material, or may include a fork that supports the workpiece that is the plate material from below.

In the example illustrated in FIG. 1, the laser beam machine apparatus 1A includes the container 13, which receives the dross D from the dross transportation conveyor 2A. The container 13 is disposed immediately below the dross transportation conveyor 2A in the discharge region RG2.

The laser beam machine apparatus 1A may include the second transportation conveyor 15, which receives the dross D from the dross transportation conveyor 2A. In an example illustrated in FIG. 32, a dross transportation surface of the second transportation conveyor 15 is disposed immediately below the dross transportation conveyor 2A in the discharge region RG2. In the example illustrated in FIG. 32, the second transportation conveyor 15 transports the dross that has been received from the dross transportation conveyor 2A to the container 13.

In an example illustrated in FIG. 33, the controller 8 controls the laser beam irradiator 60 and the mover 7 (for example, the first driver 71b, the second driver 73b, and the third driver 75b). The controller 8 may control the transferer 11 (see FIG. 30), which transports the workpiece support member 90, and/or the workpiece transferer 12 (see FIG. 31), which transports the workpiece W. The controller 8 may also control the driver 29 of the dross transportation conveyor 2A.

In an example illustrated in FIG. 34, the controller 8 transmits an emission command R1 to the laser beam irradiator 60 (for example, the laser light source 63), and causes the laser beam LB to be emitted from the laser head 61. More specifically, the controller 8 transmits the emission command R1 to the laser beam irradiator 60 (for example, the laser light source 63), and the laser beam irradiator 60, which receives the emission command R1, emits the laser beam LB from the laser head 61 (more specifically, the emission opening of the laser head 61).

In the example illustrated in FIG. 34, the controller 8 transmits a movement command S to the mover 7, and moves the laser head 61. More specifically, the controller 8 transmits the movement command S to the mover 7, and the mover 7, which receives the movement command S, moves the laser head 61.

As illustrated in FIG. 34, the controller 8 includes: a hardware processor 80 (hereinafter, simply referred to as a "processor 80"); a memory 82; a communication circuit 84; and an inputter 86 (for example, a display 862 equipped with a touch panel). The processor 80, the memory 82, the communication circuit 84, and the inputter 86 are connected with each other through a bus 88. Data necessary for machining the workpiece W (for example, workpiece data 826 including shape data of the workpiece W and machine position data of the workpiece W) may be input into the controller 8 via the inputter 86, or may be input into the controller 8 from another computer via the communication circuit 84. It is to be noted that the inputter 86 is not limited to the display 862, which is equipped with a touch panel. For example, the controller 8 may include: the inputter 86 such as a button, a switch, a lever, a pointing device, or a keyboard; and a display that displays data that has been input into the inputter 86 or other information.

The memory 82 stores data such as the workpiece data 826 and programs such as a machining program 822. The memory 82 is a storage medium readable by the processor 80 of the controller 8. The memory 82 may be, for example, a non-volatile or volatile semiconductor memory such as a RAM, a ROM, or a flash memory, may be a magnetic disk, or may be a memory in another format.

The processor 80 of the controller 8 executes the machining program 822, which is stored in the memory 82, and thus the controller 8 generates a control command. In addition, the communication circuit 84 transmits such a control command to to-be-controlled equipment (more specifically, the laser beam irradiator 60, the mover 7, the transferer 11, the workpiece transferer 12, and the driver 29). In this manner, the processor 80 executes the machining program 822, and thus the controller 8 is capable of controlling the laser beam irradiator 60, the mover 7, the transferer 11, the workpiece transferer 12, and the driver 29.

The controller 8 may control the moving speed of the group of transportation plates 3 in conjunction with the control of at least one of the laser beam irradiator 60 and the mover 7.

For example, while the laser beam irradiator 60 stops emission of the laser beam LB, the controller 8 may control the driver 29 so that the group of transportation plates 3 moves at a first speed (a speed other than zero), and while the laser beam irradiator 60 is emitting the laser beam LB, the controller 8 may control the driver 29 so that the group of transportation plates 3 move at a second speed faster than the first speed.

For example, the controller 8 may control the driver 29 to change the moving speed of the group of transportation plates 3 in accordance with the magnitude of the output of the laser beam LB emitted by the laser beam irradiator 60 or the type of machining performed by the laser beam irradiator 60 (for example, drilling or cutting).

### (Cooler 95)

As illustrated in FIG. 35, the laser beam machine apparatus 1A may include a cooler 95, which forcibly cools the group of transportation plates 3.

For example, the laser beam machine apparatus 1A may include a cooler 95a of an air-cooling type for blowing air onto the group of transportation plates 3. In an example illustrated in FIG. 35, the cooler 95a includes an air injector 96, which blows air onto the back surface 3n of each transportation plate 3 in the group of transportation plates 3. Alternatively or additionally, the cooler 95a may include an air injector for blowing air onto the transportation surface 3u of each transportation plate 3 in the group of transportation plates 3.

Alternatively or additionally, the laser beam machine apparatus 1A may include a cooler 95b of a liquid-cooling type for cooling the group of transportation plates 3 with a liquid. In an example illustrated in FIG. 35, the cooler 95b includes a liquid bath 97 (for example, a water tank), which is disposed so that the circling orbit of the group of transportation plates 3 passes through the liquid bath 97 laterally. The group of transportation plates 3 passes through the liquid (for example, water) in the liquid tank 97, and are then cooled. Furthermore, the liquid that has adhered to the surfaces of the group of transportation plates 3 is vaporized by the irradiation of the laser beam (vaporization heat), thereby eliminating or minimizing a temperature rise of the transportation plates 3.

### (Second Embodiment)

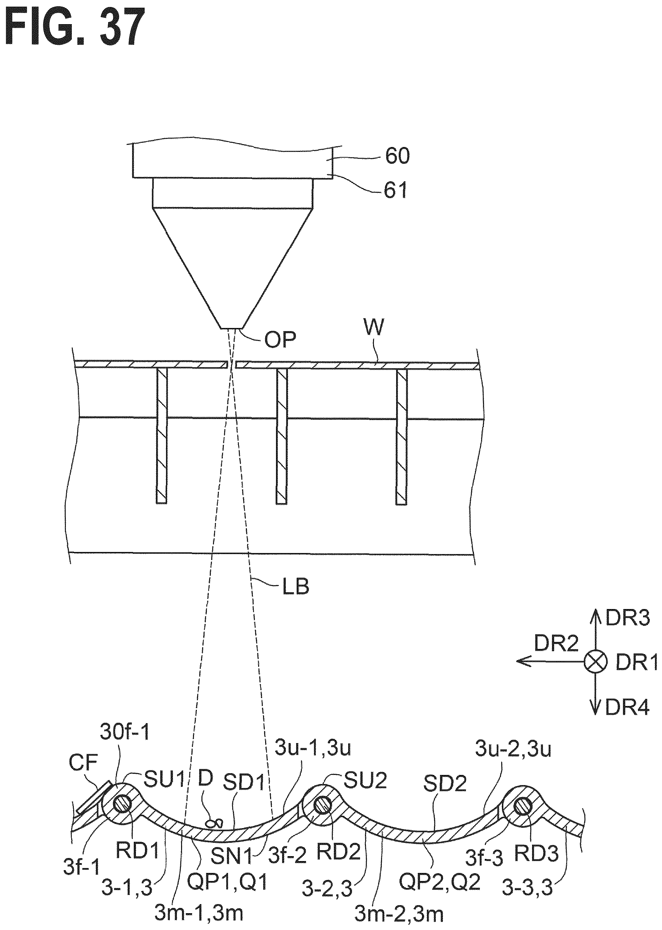

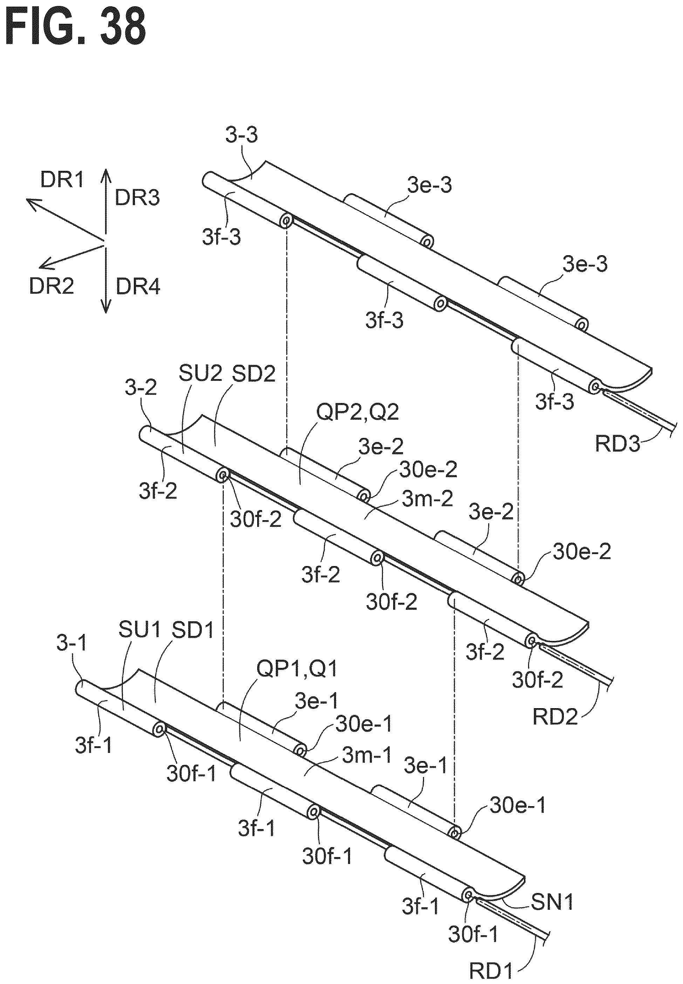

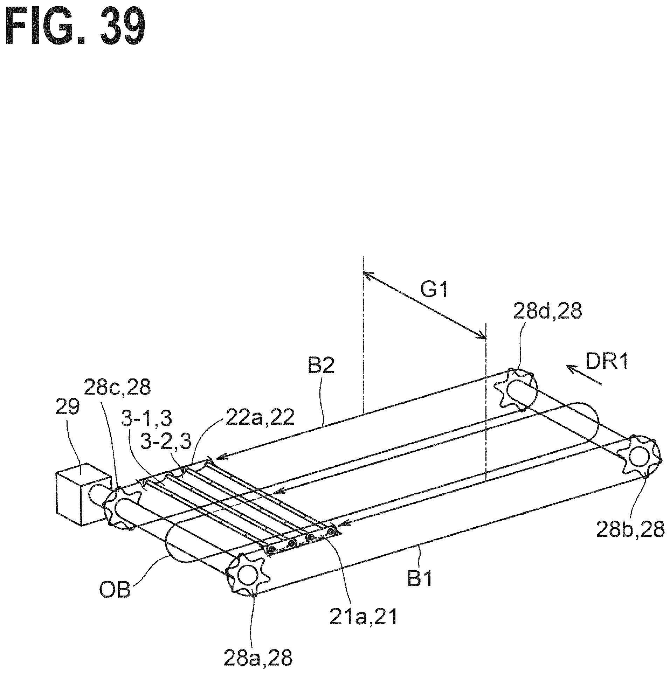

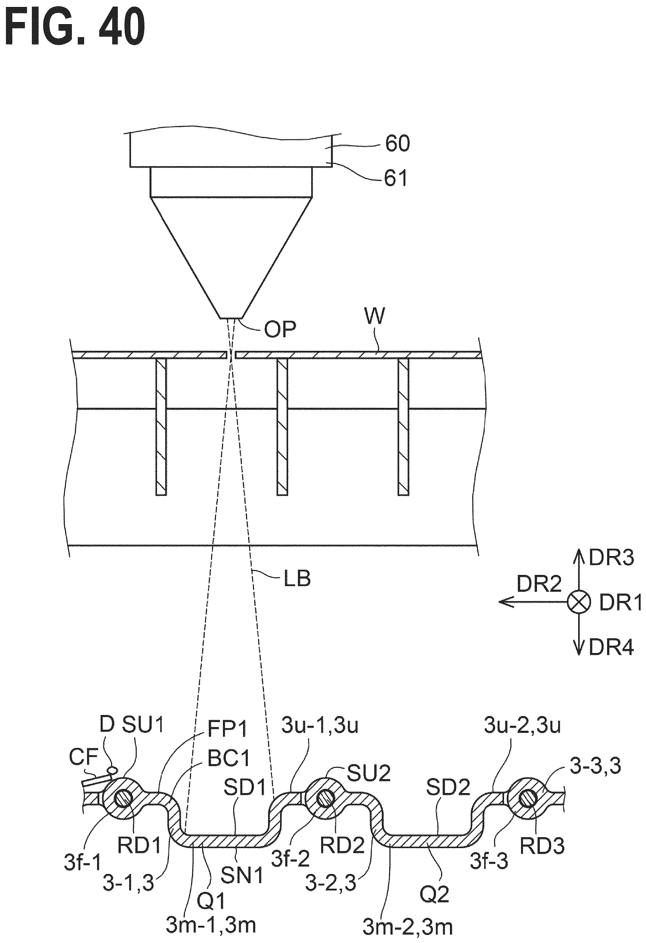

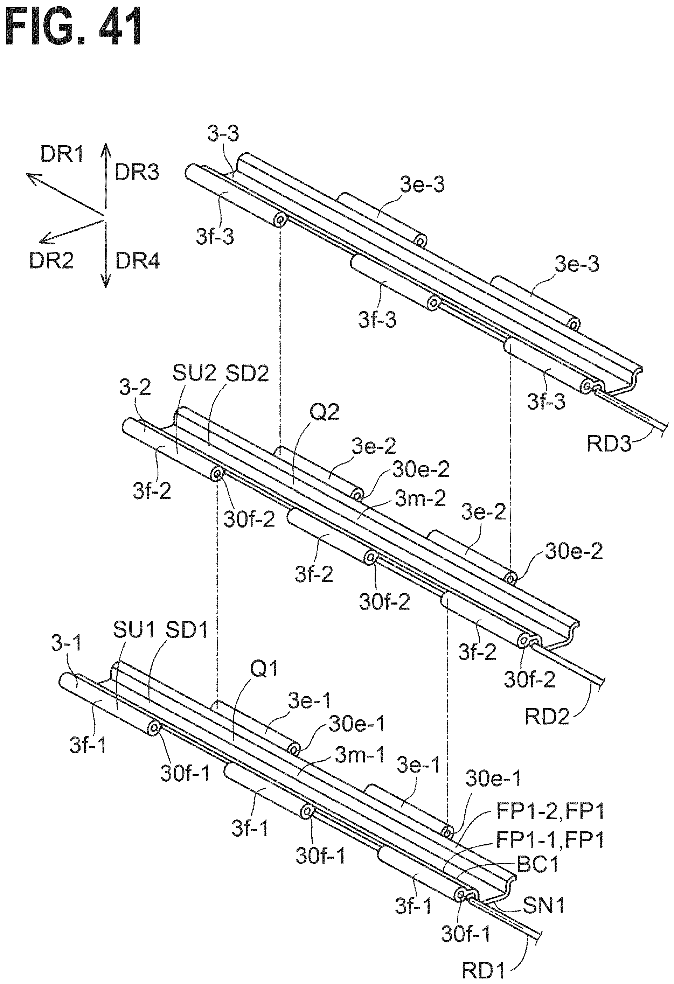

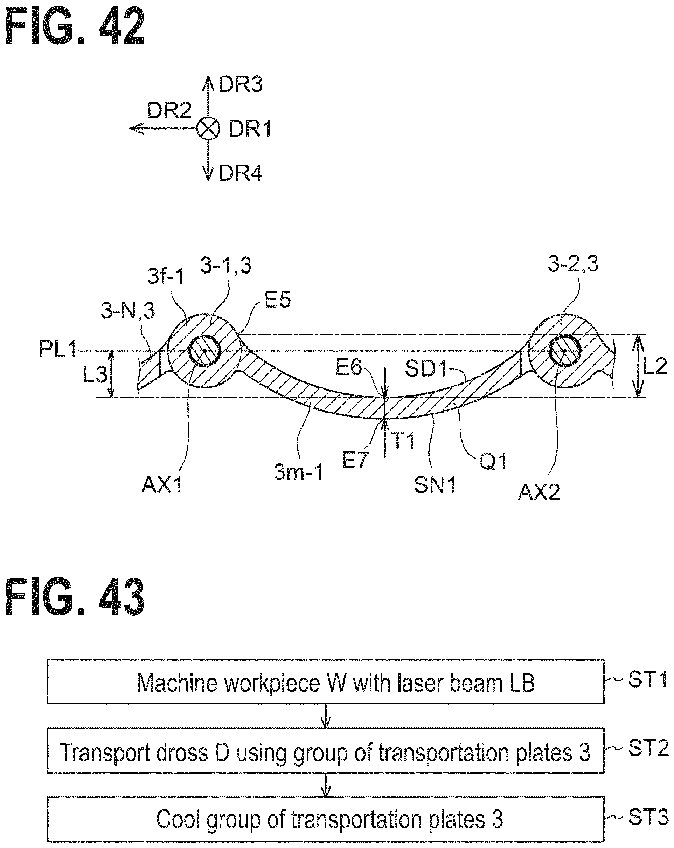

Referring to FIGs. 36 to 42, a dross transportation conveyor 2B and a laser beam machine apparatus 1B according to a second embodiment will be described. FIG. 36 is a schematic cross-sectional view of the laser beam machine apparatus 1B according to the second embodiment. FIG. 37 is a schematic cross-sectional view of a part of the laser beam machine apparatus 1B according to the second embodiment. FIG. 38 is an exploded perspective view of a part of a group of transportation plates 3, schematically illustrating the part of the group of transportation plates 3. FIG. 39 is a schematic perspective view of a state in which the group of transportation plates 3 including the first transportation plate 3-1 and the second transportation plate 3-2 is movable along the circling orbit OB. FIG. 40 is a schematic cross-sectional view of a part of the laser beam machine apparatus 1B according to the second embodiment. FIG. 41 is an exploded perspective view of a part of the group of transportation plates 3, schematically illustrating the part of the group of transportation plates 3. FIG. 42 is a schematic cross-sectional view of a part of the group of transportation plates 3.

The dross transportation conveyor 2B according to the second embodiment is different from the dross transportation conveyor 2A according to the first embodiment in that each transportation plate 3 in the group of transportation plates 3 is hinge-coupled with another transportation plate.

In the second embodiment, differences from the first embodiment will be mainly described. On the other hand, in the second embodiment, repeated descriptions of the matters that have been described in the first embodiment will be omitted. Therefore, it is needless to say that the matters that have been described in the first embodiment are applicable to the second embodiment, even though they are not explicitly described in the second embodiment. On the contrary, all matters to be described in the second embodiment are applicable to the first embodiment.

In an example illustrated in FIGs. 36 and 37, the dross transportation conveyor 2B according to the second embodiment includes a group of transportation plates 3, which transports dross generated by irradiation of the laser beam on a workpiece with, and the group of transportation plates 3 includes a first transportation plate 3-1, which extends in the first direction DR1, and a second transportation plate 3-2, which is disposed to be adjacent to the first transportation plate 3-1, and which extends in the first direction DR1. As illustrated in FIG. 38, the first transportation plate 3-1 includes: a first front end portion 3f-1; a first rear end portion 3e-1; and a first middle portion 3m-1, which connects the first front end portion 3f-1 with the first rear end portion 3e-1. The first middle portion 3m-1 includes a first concave portion Q1, which extends in the first direction DR1.

In the example illustrated in FIG. 36, the laser beam machine apparatus 1B according to the second embodiment includes: the above-described dross transportation conveyor 2B; the laser beam irradiator 60 including the laser head 61, which irradiates the workpiece W with a laser beam; the mover 7, which moves the laser head 61 relative to the workpiece support member 90 for supporting the workpiece W; the laser beam irradiator 60; and the controller 8, which controls the mover 7.

Therefore, the dross transportation conveyor 2B and the laser beam machine apparatus 1B according to the second embodiment have the same effects as those of the dross transportation conveyor 2A and the laser beam machine apparatus 1A according to the first embodiment.

As illustrated in FIG. 38, the first rear end portion 3e-1 of the first transportation plate 3-1 and the second front end portion 3f-2 of the second transportation plate 3-2 are hinge-coupled with each other. In the example illustrated in FIG. 38, a rod (hereinafter, referred to as a "second rod RD2") is disposed to pass through both the first rear end portion 3e-1 of the first transportation plate 3-1 and the second front end portion 3f-2 of the second transportation plate 3-2, and thus the first rear end portion 3e-1 of the first transportation plate 3-1 and the second front end portion 3f-2 of the second transportation plate 3-2 are hinge-coupled with each other. In addition, a rod (hereinafter, referred to as a "third rod RD3") is disposed to pass through both the second rear end portion 3e-2 of the second transportation plate 3-2 and the third front end portion 3f-3 of the third transportation plate 3-3, and thus the second rear end portion 3e-2 of the second transportation plate 3-2 and the third front end portion 3f-3 of the third transportation plate 3-3 are hinge-coupled with each other.

### (Optional and Additional Configurations)

Subsequently, referring to FIGs. 1 to 42, optional and additional configurations that are adoptable in the dross transportation conveyor 2B according to the second embodiment and the laser beam machine apparatus 1B will be described.

### (First Concave Portion Q1)

In an example illustrated in FIG. 37, the first concave portion Q1 is a concave portion that is concave in the fourth direction DR4. The first concave portion Q1 includes a transportation surface for transporting the dross and a back surface disposed on an opposite side of the transportation surface.

The transportation surface of the first concave portion Q1 is a concave-shaped transportation surface SD1, which is concave in the fourth direction DR4. In the example illustrated in FIG. 37, the concave-shaped transportation surface SD1 has a substantially arc shape in the cross-section perpendicular to the first direction DR1. Alternatively, the concave-shaped transportation surface SD1 may have a substantially letter V shape, a substantially letter U shape, or any other shape in the cross-section perpendicular to the first direction DR1.

The back surface of the first concave portion Q1 is a protrusion surface SN1, which protrudes in the fourth direction DR4. In the example illustrated in FIG. 37, the protrusion surface SN1 has a substantially arc shape in the cross-section perpendicular to the first direction DR1. Alternatively, the protrusion surface SN1 may have a substantially letter V shape, a substantially letter U shape, or any other shape in the cross-section perpendicular to the first direction DR1.

### (Dross Transportation Conveyor 2B)

In the example illustrated in FIG. 36, the dross transportation conveyor 2B is partially disposed immediately below the laser beam irradiator 60. In addition, the group of transportation plates 3 of the dross transportation conveyor 2B is configured to be movable across the machine region RG1 (more specifically, a region immediately below the laser beam irradiator 60).

In the example illustrated in FIG. 36, the group of the transportation plates 3 transports the dross from the machine region RG1 to the discharge region RG2. In the example illustrated in FIG. 36, each transportation plate 3 in the group of transportation plates 3 is reversed (more specifically, makes a turn by 180 degrees around a horizontal shaft) in the discharge region RG2. As a result, the dross D transported by the group of transportation plates 3 is discharged from the group of transportation plates 3 in the discharge region RG2. It is to be noted that when the cut-off pieces CF (see FIG. 37) are transported by the group of transportation plates 3, the cut-off pieces CF are also discharged from the group of transportation plates 3 in the discharge region RG2.

In the example illustrated in FIG. 39, the dross transportation conveyor 2B includes: the first endless component 21 (more specifically, the first endless chain 21a); the second endless component 22 (more specifically, the second endless chain 22a); and the driver 29. The first endless component 21 and the second endless component 22 support the group of transportation plates 3. More specifically, the group of transportation plates 3 is attached to the first endless component 21 and the second endless component 22.

The first endless component 21 and the second endless component 22 are directly or indirectly driven by the driver 29. Since the first endless component 21, the second endless component 22, and the driver 29 have been described in the first embodiment, repeated descriptions of these configurations will be omitted.

### (Group of Transportation Plates 3)

The group of transportation plates 3 moves along the circling orbit OB. As illustrated in FIG. 39, the circling orbit OB of the group of transportation plates 3 is parallel to a first circling orbit B1 of the first endless chain 21a, and is parallel to the second circling orbit B2 of the second endless chain 22a. In the example illustrated in FIG. 36, the group of transportation plates 3 is disposed continuously to form an annular transportation body.

The length of each transportation plate 3 in the group of transportation plates 3 is, for example, equal to or longer than one meter and equal to or shorter than three meters. The width of each transportation plate 3 in the group of transportation plates 3 is, for example, equal to or larger than 40 millimeters and equal to or smaller than 200 millimeters. The plate thickness of each transportation plate 3 in the group of transportation plates 3 (more specifically, the plate thickness of the middle portion 3m of each transportation plate 3 in the group of transportation plates 3) is, for example, equal to or smaller than five millimeters or equal to or smaller than three millimeters. Each transportation plate 3 in the group of transportation plates 3 is made of metal. Each transportation plate 3 in the group of transportation plates 3 is made of, for example, steel, more specifically, a hot-rolled mild steel plate, a cold-rolled steel plate, or a cold-rolled stainless steel plate.

In the example illustrated in FIG. 38, the first transportation plate 3-1 includes: the first front end portion 3f-1; the first rear end portion 3e-1; and the first middle portion 3m-1, which connects the first front end portion 3f-1 with the first rear end portion 3e-1. A plurality of first front reception portions 30f-1 for receiving a first rod RD1 (more specifically, a plurality of through hole portions into which the first rod RD1 is inserted) are formed in the first front end portion 3f-1 of the first transportation plate 3-1. In addition, a plurality of first rear reception portions 30e-1 for receiving a second rod RD2 (more specifically, a plurality of through hole portions into which a second rod RD2 is inserted) are formed in the first rear end portion 3e-1 of the first transportation plate 3-1.

In the example illustrated in FIG. 38, the second transportation plate 3-2 includes: the second front end portion 3f-2; the second rear end portion 3e-2; and the second middle portion 3m-2, which connects the second front end portion 3f-2 with the second rear end portion 3e-2. A plurality of second front reception portions 30f-2 for receiving the second rod RD2 (more specifically, a plurality of through hole portions into which the second rod RD2 is inserted) are formed in the second front end portion 3f-2 of the second transportation plate 3-2. Further, a plurality of second rear reception portions 30e-2 for receiving a third rod RD3 (more specifically, a plurality of through hole portions into which the third rod RD3 is inserted) are formed in the second rear end portion 3e-2 of the second transportation plate 3-2.

### (First Transportation Plate 3-1)

In the example illustrated in FIG. 37, the first front end portion 3f-1 of the first transportation plate 3-1 includes a convex-shaped transportation surface SU1, which is convex in the third direction DR3. The convex-shaped transportation surface SU1 constitutes a part of the first transportation surface 3u-1 of the first transportation plate 3-1. In the example illustrated in FIG. 37, the convex-shaped transportation surface SU1 serves as an upper surface of the first front reception portion 30f-1. The convex-shaped transportation surface SU1 extends in the first direction DR1. In the example illustrated in FIG. 37, the convex-shaped transportation surface SU1 has a substantially arc shape when viewed in the direction along the first direction DR1. In addition, the convex-shaped transportation surface SU1 has a substantially arc shape in the cross-section perpendicular to the first direction DR1.

When the convex-shaped transportation surface SU1 of the first transportation plate 3-1 is irradiated with the laser beam LB, the first front end portion 3f-1 (or the first transportation plate 3-1) is thermally deflected in the third direction DR3.

In the example illustrated in FIG. 37, the first middle portion 3m-1 (more specifically, the first concave portion Q1) of the first transportation plate 3-1 includes a concave-shaped transportation surface SD1, which is concave in the fourth direction DR4. The concave-shaped transportation surface SD1 extends in the first direction DR1.

When the concave-shaped transportation surface SD1 of the first transportation plate 3-1 is irradiated with the laser beam LB, the first middle portion 3m-1 (or the first transportation plate 3-1) is thermally deflected in the fourth direction DR4.

The direction in which the first front end portion 3f-1 is thermally deflected by the irradiation of the laser beam LB on the convex-shaped transportation surface SU1 of the first transportation plate 3-1 and the direction in which the first middle portion 3m-1 is thermally deflected by the irradiation of the laser beam LB on the first concave portion Q1 (or the concave-shaped transportation surface SD1) are opposite to each other. Therefore, the thermal deformation of the first transportation plate 3-1 as a whole is eliminated or minimized.

In the example illustrated in FIGs. 37 and 38, in the cross-section perpendicular to the first direction DR1, the first concave portion Q1, the concave-shaped transportation surface SD1, and the protrusion surface SN1 each have a substantially arc shape. In addition, when viewed in the direction along the first direction DR1, the first concave portion Q1, the concave-shaped transportation surface SD1, and the protrusion surface SN1 each have a substantially arc shape.

Alternatively, as illustrated in FIGs. 40 and 41, in the cross-section perpendicular to the first direction DR1, the first concave portion Q1, the concave-shaped transportation surface SD1, and the protrusion surface SN1 each may have a substantially letter U shape. In addition, when viewed in the direction along the first direction DR1, the first concave portion Q1, the concave-shaped transportation surface SD1, and the protrusion surface SN1 each may have a substantially letter U shape. Further alternatively, when viewed in the direction along the first direction DR1, the first concave portion Q1, the concave-shaped transportation surface SD1, and the protrusion surface SN1 each may have a substantially letter V shape.

In the example illustrated in FIG. 40, the first middle portion 3m-1 of the first transportation plate 3-1 includes the first concave portion Q1. The first middle portion 3m-1 also includes a flat plate portion FP1 in addition to the first concave portion Q1. In addition, the first concave portion Q1 and the flat plate portion FP1 are connected with each other through a bent portion BC1. As illustrated in FIG. 41, the first concave portion Q1, the flat plate portion FP1, and the bent portion BC1 each extend in the first direction DR1.

As illustrated in FIG. 41, the first middle portion 3m-1 may include: a first flat plate portion FP1-1; a second flat plate portion FP1-2; and a first concave portion Q1, which is disposed between the first flat plate portion FP1-1 and the second flat plate portion FP1-2. In the example illustrated in FIG. 41, the first flat plate portion FP1-1 is connected with the first front end portion 3f-1, and the second flat plate portion FP1-2 is connected with the first rear end portion 3e-1.

In the example illustrated in FIG. 41, the second transportation plate 3-2 and the third transportation plate 3-3 each have the same shape as that of the first transportation plate 3-1.

### (Size of First Concave Portion Q1)

In an example illustrated in FIG. 42, a depth L2 of the concave-shaped transportation surface SD1 (more specifically, a distance in the direction along the third direction DR3 between a point E5, which is located furthest in the third direction DR3 of the concave-shaped transportation surface SD1, and a deepest portion E6 of the concave-shaped transportation surface SD1) is larger than a plate thickness T1 of the first concave portion. Such a depth L2 of the concave-shaped transportation surface SD1 is, for example, equal to or larger than two millimeters, equal to or larger than four millimeters, or equal to or larger than six millimeters.

In the example illustrated in FIG. 42, the dross transportation conveyor 2B includes another transportation plate 3-N, which is disposed to be adjacent to the first front end portion 3f-1 of the first transportation plate 3-1. The first transportation plate 3-1 is tiltable relative to such another transportation plates 3-N about a front tilt axis AX1. The first transportation plate 3-1 is also tiltable relative to the second transportation plate 3-2 about a rear tilt axis AX2).

As illustrated in FIG. 42, a first plane PL1 is defined as a plane including both the front tilt axis AX1 of the first transportation plate 3-1 and the rear tilt axis AX2 of the first transportation plate 3-1. In the example illustrated in FIG. 42, the deepest portion E6 of the concave-shaped transportation surface SD1 is located further in the fourth direction DR4 than the first plane PL1.

A distance L3 between the deepest portion E6 of the concave-shaped transportation surface SD1 and the first plane PL1 is, for example, equal to or longer than two millimeters, equal to or longer than four millimeters, or equal to or longer than six millimeters.

In the example illustrated in FIG. 42, an end E7 in the fourth direction DR4 of the first concave portion Q1 is located furthest in the fourth direction DR4 in the entirety of the first transportation plate 3-1.

### (Laser Beam Machine Apparatus 1B)

As illustrated in FIG. 36, the laser beam machine apparatus 1B includes: the dross transportation conveyor 2B; the laser beam irradiator 60; the mover 7; and the controller 8. Additionally, the laser beam machine apparatus 1B may include the workpiece support member 90. Since the laser beam irradiator 60, the mover 7, the controller 8, and the workpiece support member 90 have already been described in the first embodiment, repeated descriptions of these configurations will be omitted.

### (Third Embodiment)

A workpiece machining method according to the third embodiment will be described with reference to FIGs. 1 to 43. FIG. 43 is a flowchart of an example of a workpiece machining method according to the third embodiment.

The workpiece machining method according to the third embodiment may be performed by using the laser beam machine apparatus 1A according to the first embodiment, may be performed by using the laser beam machine apparatus 1B according to the second embodiment, or may be performed by using another laser beam machine apparatus.

In a first step ST1, the workpiece W is machined. The first step ST1 is a workpiece machining process. In the workpiece machining process, the workpiece W is machined by the irradiation of the laser beam LB. More specifically, the workpiece W is irradiated with the laser beam LB from the laser head 61 of the laser beam irradiator 60, and thus the workpiece W is machined. The wavelength of the laser beam LB emitted from the laser head 61 of the laser beam irradiator 60 is, for example, equal to or longer than 1060 nanometers and equal to or shorter than 1080 nanometers.

The workpiece W to be machined in the workpiece machining process (the first step ST1) is, for example, a plate material. The workpiece machining process may include: moving the laser head 61, which emits the laser beam LB; and cutting the workpiece W with the laser beam. In addition, the workpiece machining process may include emitting the laser beam LB from the laser head 61, which is temporarily in a stationary state, to drill the workpiece W with the laser beam. The workpiece W is machined by the laser beam LB, and then a product (for example, a plate product) is formed from the workpiece W.

In the workpiece machining process (the first step ST1), the workpiece W is irradiated with the laser beam LB, and then the dross D is generated from the workpiece W. Additionally, the workpiece W is irradiated with the laser beam LB, and then the cut-off pieces CF may be generated from the workpiece W. The dross D and/or the cut-off pieces CF that have been generated fall downward in the machine region RG1. The dross D and/or the cut-off pieces CF, which fall downward, are received by the dross transportation conveyor 2.

In the workpiece machining process (the first step ST1), the laser beam LB that passes through the workpiece W reaches the dross transportation conveyor 2. The laser beam LB that reaches the dross transportation conveyor 2 raises the temperature of the group of transportation plates 3 including the first transportation plate 3-1 and the second transportation plate 3-2. The first transportation plate 3-1, the second transportation plate 3-2, and another plate are deformed by thermal expansion.

In a second step ST2, the dross D is transported. The second step ST2 is a dross transporting process. In the dross transporting process, the dross D, which is generated by the irradiation of the laser beam LB on the workpiece W, is transported by using the group of transportation plates 3 including the first transportation plate 3-1, which extends in the first direction DR1, and the second transportation plate 3-2, which is disposed to be adjacent to the first transportation plate 3-1, and which extends in the first direction DR1. More specifically, the group of transportation plates 3 transports the dross D from the machine region RG1 to the discharge region RG2.

As illustrated in FIG. 15, FIG. 18, FIG. 20, FIG. 23, FIG. 38, or FIG. 41, the first transportation plate 3-1 includes: the first front end portion 3f-1; the first rear end portion 3e-1; and the first middle portion 3m-1, which connects the first front end portion 3f-1 with the first rear end portion 3e-1. In addition, the first middle portion 3m-1 includes the first concave portion Q1, which extends in the first direction DR1. The second transportation plate 3-2 includes: the second front end portion 3f-2; the second rear end portion 3e-2; and the second middle portion 3m-2, which connects the second front end portion 3f-2 with the second rear end portion 3e-2. Further, the second middle portion 3m-2 includes the second concave portion Q2, which extends in the first direction DR1.

The second step ST2 (the dross transporting process) is performed in parallel with the first step ST1 (the workpiece machining process). More specifically, the workpiece W is irradiated with the laser beam LB from the laser beam irradiator 60 in a state in which the dross transportation conveyor 2 is being driven (in other words, in a state in which the group of transportation plates 3 is moving along the circling orbit OB). By the irradiation of the laser beam LB on the workpiece W, the dross D and/or the cut-off pieces CF are intermittently or continuously generated, and the generated dross D and/or the generated cut-off pieces CF are sequentially transported by the dross transportation conveyor 2.

In the example illustrated in FIG. 14, FIG. 16, FIG. 17, FIG. 19, FIG. 21, FIG. 22, FIG. 37, or FIG. 40, a workpiece machining process (a process of machining the workpiece W) is performed in a state in which the thermal deflection of the first transportation plate 3-1 is eliminated or minimized, because the direction in which the first middle portion 3m-1 is thermally deflected by the irradiation of the laser beam LB on the first concave portion Q1 and the direction in which the first front end portion 3f-1 is thermally deflected by the irradiation of the laser beam LB on the first front end portion 3f-1 are opposite to each other (if necessary, see the directions of the thermal deflection illustrated in FIGs. 6 and 7). Therefore, although the first transportation plate 3-1 is thermally deformed resulting from the irradiation of the laser beam, large thermal deformation leading to the thermoplastic deformation is eliminated or minimized.

Also in the example illustrated in FIG. 14, FIG. 16, FIG. 17, FIG. 19, FIG. 21, FIG. 22, FIG. 37, or FIG. 40, the workpiece machining process (the process of machining the workpiece W) is performed in a state in which the thermal deflection of the second transportation plate 3-2 is eliminated or minimized, because the direction in which the second middle portion 3m-2 is thermally deflected by the irradiation of the laser beam LB on the second concave portion Q2 and the direction in which the second front end portion 3f-2 is thermally deflected by the irradiation of the laser beam LB on the second front end portion 3f-2 are opposite to each other. Therefore, although the second transportation plate 3-2 is thermally deformed resulting from the irradiation of the laser beam, large thermal deformation leading to the thermoplastic deformation is eliminated or minimized.

In a third step ST3, the group of transportation plates 3 is cooled. The third step ST3 is a cooling process. The cooling process (the third step ST3) is performed by, for example, natural cooling. More specifically, after the machining of the workpiece W ends, the cooling process is performed while the group of transportation plates 3 is left as they are at room temperature.

Additionally, the cooling process may include forcibly cooling the group of transportation plates 3 using at least one of the cooler 95a of an air-cooling type and the cooler 95b of a liquid-cooling type. For example, as illustrated in FIG. 35, the cooling process may include blowing, by the cooler 95a of the air-cooling type, air onto the group of transportation plates 3. Alternatively or additionally, the cooling process may include causing the group of transportation plates 3 to pass through the liquid (for example, water) in the liquid bath 97. Further, the cooling process may include spraying, by the cooler 95b of the liquid-cooling type, the liquid (for example, water) onto the group of transportation plates 3.

Forcibly cooling the group of transportation plates 3 using at least one of the cooler 95a of the air-cooling type and the cooler 95b of the liquid-cooling type may be performed in parallel with the workpiece machining process (the first step ST1) and the dross transporting process (the second step ST2).

In the workpiece machining method according to the third embodiment, the thermoplastic deformation of the first transportation plate 3-1 is eliminated or minimized, and thus the first transportation plate 3-1 that has been cooled in the cooling process returns to its original shape before the thermal deformation. Also in the workpiece machining method according to the third embodiment, the thermoplastic deformation of the second transportation plate 3-2 is eliminated or minimized, and thus the second transportation plate 3-2 that has been cooled in the cooling process returns to its original shape before the thermal deformation. By repeatedly performing the above-described first step ST1 to the above-described third step ST3, each transportation plate 3 in the group of transportation plates 3 may be plastically deformed to some extent, but plastic deformation that causes a failure in the operation of the dross transportation conveyor 2 is avoided.

The present invention is not limited to the above-described embodiments or modifications, and it is apparent that the embodiments or modifications can be appropriately modified or changed within the scope of the technical idea of the present invention. In addition, various techniques used in each embodiment or each modification are applicable to other embodiments or other modifications as long as a technical contradiction does not occur. Further, any additional configuration in each embodiment or each modification can be omitted as appropriate.

### Description of the Reference Numerical

1, 1A, 1B ... Laser beam machine apparatus, 2, 2A, 2B ... Dross transportation conveyer, 3 ... Transportation plate, 3' ... Transportation plate, 3-1 ... First transportation plate, 3-2 ... Second transportation plate, 3-3 ... Third transportation plate, 3-N ... Transportation plate, 3a, 3a -1, 3a-2, 3a-3 ... Left end portion, 3b, 3b-1, 3b-2, 3b-3 ... Right end portion, 3e ... Rear end portion, 3e-1 ... First rear end portion, 3e-2 ... Second rear end portion, 3e-3 ... Third rear end portion, 3e-N ... Rear end portion of transportation plate 3N, 3f ... Front end portion, 3f-1 ... First front end portion, 3f-2 ... Second front end portion, 3f-3 ... Third front end portion, 3m ... Middle portion, 3m-1 ... First middle portion, 3m-2 ... Second middle portion, 3m-3 ... Third middle portion, 3n ... Back surface, 3n-1 ... First back surface, 3n-2 ... Second back surface, 3u ... Transportation surface, 3u-1 ... First transportation surface, 3u-2 ... Second transportation surface, 4, 4-1, 4-2 ... Laser beam reflection layer, 7 ... Mover, 8 ... Controller, 11 ... Transferer, 12 ... Workpiece transferer, 12a ... Plate material transferer, 13 ... Container, 15 ... Second transportation conveyer, 21 ... First endless component, 21a ... First endless chain, 22 ... Second endless component, 22a ... Second endless chain, 28 ... Sprocket, 28a ... First sprocket, 28b ... Second sprocket, 28c ... Third sprocket, 28d ... Fourth sprocket, 29 ... Mover, 30e-1 ... First rear reception portion, 30e-2 ... Second rear reception portion, 30f-1 ... First front reception portion, 30f-2 ... Second front reception portion, 35-1 ... First base material, 35-2 ... Second base material, 35u ... Surface of first base material, 60 ... Laser beam irradiator, 61 ... Laser head, 63 ... Laser light source, 65 ... Optical component, 70 ... Base, 71 ... First mover, 71a ... First mover body, 71b ... First driver, 73 ... Second mover, 73a ... Second mover body, 73b ... Second driver, 75 ... Third mover, 75a ... Third mover body, 75b ... Third driver, 80 ... Hardware processor, 82 ... Memory, 84 ... Communication circuit, 86 ... Inputter, 88 ... Bus, 90 ... Workpiece support member, 91 ... Plate material, 92 ... Top portion, 93 ... Frame body, 95, 95a, 95b ... Cooler, 96 ... Air injector, 97 ... Liquid bath, 121 ... Sucker, 822 ... Machining program, 826 ... Workpiece data, 862 ... Display equipped with touch panel, AX1 ... Front tilt axis, AX2 ... Rear tilt axis, B1 ... First circling orbit, B2 ... Second circling orbit, BA1 ... First bent portion, BA2 ... Second bent portion, BB1, BB2, BC1 ... Bent portion, BT ... Bolt, C1 ... Boundary portion, CF ... Cut-off piece, CL ... Upward inclination, CP, CP1, CP2 ... Convex-shaped curved portion, D ... Dross, DR1 ... First direction, DR2 ... Second direction, DR3 ... Third direction, DR4 ... Fourth direction, E1 ... Rear end edge of transportation plate 3-N, E2 ... Front tip edge of second transportation plate, E3 ... Rear end edge of first transportation plate, E4 ... Front tip edge of third transportation plate, E5 ... Point located furthest in third direction of concave-shaped transportation surface, E6 ... Deepest portion of concave-shaped transportation surface, E7 ... End in fourth direction of first concave portion, EG ... Edge portion, FP1 ... Flat plate portion, FP1-1 ... First flat plate portion, FP1-2 ... Second flat plate portion, FP2 ... Flat plate portion, G1 ... Gap between first circling orbit and second circling orbit, L1 ... Length of first transportation plate, L2 ... Depth of concave-shaped transportation surface, L3 ... Distance between deepest portion of concave-shaped transportation surface and first plane, LB ... Laser beam, OB ... Circling orbit, OP ... Emission opening, PL1 ... First plane, PT ... Pallet, Q1, Q1-1, Q1-2 ... First concave portion, Q2 ... Second concave portion, QP1, QP2 ... Concave-shaped curved portion, R1 ... Emission command, RD1 ... First rod, RD2 ... Second rod, RD3 ... Third rod, RG1 ... Machine region, RG2 ... Discharge region, RG3 ... Removal region, S ... Movement command, SD1, SD2 ... Concave-shaped transportation surface, SN1 ... Protrusion surface, SU1, SU2 ... Convex-shaped transportation surface, T1 ... Plate thickness of first concave portion, TP ... Upright portion, TP1 ... First upright portion, TP2 ... Second upright portion, W ... Workpiece, Wb ... Machined workpiece, W1 ... Width of first transportation plate, W2 ... Width of second transportation plate, h1, h2 ... Hole portion.

## Claims

1. A dross transportation conveyor comprising:
a group of transportation plates including a first transportation plate and a second transportation plate, the first transportation plate extending in a first direction, the second transportation plate being disposed to be adjacent to the first transportation plate and extending in the first direction, the group of transportation plates transporting dross generated by irradiation of a laser on a workpiece,
wherein the first transportation plate comprises:
a first front end portion;
a first rear end portion; and
a first middle portion comprising a first concave portion that extends in the first direction, the first middle portion connecting the first front end portion with the first rear end portion.

2. The dross transportation conveyor according to claim 1, wherein a direction in which the first front end portion is thermally deflected by the irradiation of the laser on the first front end portion and a direction in which the first middle portion is thermally deflected by the irradiation of the laser on the first concave portion are opposite to each other.

3. The dross transportation conveyor according to claim 1 or 2, wherein in a cross-section perpendicular to the first direction, the first concave potion has one of a substantially arc shape, a substantially letter V shape, or a substantially letter U shape.

4. The dross transportation conveyor according to one of claims 1 to 3, wherein the first rear end portion of the first transportation plate is disposed to overlap a second front end portion of the second transportation plate.

5. The dross transportation conveyor according to one of claims 1 to 3, wherein the first rear end portion of the first transportation plate is hinge-coupled with a second front end portion of the second transportation plate.

6. The dross transportation conveyor according to one of claims 1 to 5,
wherein in a case where a third direction is defined as a direction from a back surface of the first transportation plate toward a transportation surface of the first transportation plate and a fourth direction is defined as a direction opposite to the third direction, the first concave portion is concave in the fourth direction,
wherein the first front end portion has a convex-shaped transportation surface that is convex in the third direction, and
wherein the first middle portion has a concave-shaped transportation surface that is concave in the fourth direction.

7. The dross transportation conveyor according to claim 6, wherein a depth of the concave-shaped transportation surface is larger than a plate thickness of the first concave portion.

8. The dross transportation conveyor according to one of claims 1 to 4, wherein the first front end portion comprises a convex-shaped curved portion that extends in the first direction.

9. The dross transportation conveyor according to one of claims 1 to 4, wherein the front end portion and the first concave portion constitutes a substantially letter S shape when viewed in a direction along the first direction.

10. The dross transportation conveyor according to one of claims 1 to 9, wherein the first middle portion comprises a flat plate portion in addition to the first concave portion.

11. The dross transportation conveyor according to claim 10, wherein the first concave portion and the flat plate portion are connected with each other through a bent portion that extends in the first direction.

12. The dross transportation conveyor according to one of claims 1 to 11, wherein a surface of a laser reflection layer constitutes at least a part of a transportation surface of the first transportation plate.

13. A laser machining apparatus comprising:
a laser irradiator comprising a laser head that irradiates a workpiece with a laser ;
a mover that moves the leaser head relative to a workpiece support member that supports the workpiece;
a controller configured to control the laser irradiator and the mover; and
a dross transportation conveyor,
wherein the dross transportation conveyor comprises:
a group of transportation plates including a first transportation plate and a second transportation plate, the first transportation plate extending in a first direction, the second transportation plate being disposed to be adjacent to the first transportation plate and extending in the first direction, the group of transportation plates transporting dross generated by irradiation of the laser on the workpiece, and
wherein the first transportation plate comprises:
a first front end portion;
a first rear end portion; and
a first middle portion comprising a first concave portion that extends in the first direction, the first middle portion connecting the first front end portion with the first rear end portion.

14. The laser machining apparatus according to claim 13, further comprising a cooler that forcibly cools the group of transportation plates.

15. A workpiece machining method comprising the steps of:
machining a workpiece by irradiating the workpiece with a laser and
transporting dross generated by irradiating the workpiece with the laser, by using a group of transportation plates including a first transportation plate and a second transportation plate, the first transportation plate extending in a first direction, the second transportation plate being disposed to be adjacent to the first transportation plate and extending in the first direction,
wherein the first transportation plate comprises:
a first front end portion;
a first rear end portion; and
a first middle portion comprising a first concave portion that extends in the first direction, the first middle portion connecting the first front end portion with the first rear end portion, and
wherein the step of machining the workpiece is performed in a state in which a direction in which the first middle portion is thermally deflected by irradiation of the laser on the first concave portion and a direction in which the first front end portion is thermally deflected by the irradiation of the laser on the first front end portion are opposite to each other, and therefore thermal deflection of the first transportation plate is suppressed.
